# EUROPEAN PATENT APPLICATION

(11) **EP 4 811 770 A1**
(43) Date of publication of application: **23.09.2026**
(21) Application number: 25305383.9
(22) Date of filing: 19.03.2025
(51) Int. Cl.: H04N 19/105, H04N 19/146, H04N 19/176, H04N 19/593

(54) **INTRA TEMPLATE MATCHING PREDICTION WITH PERSISTENT TEMPLATE CHARACTERISTICS**

(71) Applicant: InterDigital CE Patent Holdings, SAS, 75017 Paris (FR)
(72) Inventor: DUMAS, Thierry, 35700 RENNES (FR); CHEN, Ya, 35700 RENNES (FR); RADOSAVLJEVIC, Milos, 35000 RENNES (FR); NASER, Karam, 35250 MOUAZE (FR)
(74) Representative: Vossius & Partner Patentanwälte Rechtsanwälte mbB

(57) **Abstract**

Systems, methods, and instrumentalities associated with intra template matching prediction with persistent template characteristics are provided. The device may include a processor configured obtain template matching type information associated with a plurality of positions in a reconstructed area of a picture. The device may predict a current block based on the template matching type information. The device may decode or encode the current block based on the prediction of the current block. In examples, the device may perform a first intra template matching prediction (ITMP) based on a first template matching type to identify a first position. The device may associate the first position with the first template matching type. The device may perform a second ITMP based on a second template matching type to identify a second position. The device may associate the second position with the second template matching type.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities associated with intra template matching prediction with persistent template characteristics are provided. The device may include a processor configured obtain template matching type information associated with a plurality of positions in a reconstructed area of a picture. The device may predict a current block based on the template matching type information. The device may decode or encode the current block based on the prediction of the current block.

In examples, the device may perform a first intra template matching prediction (ITMP) based on a first template matching type to identify a first position. The device may associate the first position with the first template matching type. The device may perform a second ITMP based on a second template matching type to identify a second position. The device may associate the second position with the second template matching type. The template matching type information may be configured to indicate that the first position is associated with the first template matching type, and that the second position is associated with and the second template matching type.

In examples, the device may determine, from the plurality of positions, a position for predicting the current block. The position may be determined based on an intra template matching prediction (ITMP) index. The device may obtain a reference block based on the determined position. The device may obtain a template matching type associated with the chosen position based on the template matching type information. The device may derive a local-Illumination compensation (LIC) parameter based on the template matching type associated with the chosen position. The device may refine the reference block based on the derived LIC parameter. The current block may be predicted using the refined reference block.

In examples, the device may choose, from the plurality of positions, a position. For example, the position may be chosen based on an intra template matching prediction (ITMP) index. The device may obtain a template based on a template matching type associated with the chosen position. The template matching type information may indicate the template matching type associated with the position. The device may derive a linear filtering parameter using the obtained template. The device may filter a reference sample of the current block based on the derived linear filtering parameter. The current block may be predicted using the filtered reference sample.

In examples, the device may perform a first intra template matching prediction (ITMP) search based on a first template matching (TM) type. The first ITMP may identify a first position of the plurality of positions. The device may store the first TM type associated with the first position in a template matching type list. The device may perform a second ITMP search based on a second TM type. The second ITMP search may identify a second position of the plurality of positions. The device may store the second TM type associated with the second position in the template matching type list. The template matching type information may be stored in the template matching type list and may be configured to indicate that the first TM type is associated with the first position and the second TM type is associated with the second position.

In examples, the reconstructed area may be an ITMP search area. The device may determine that intra template matching prediction (ITMP) is enabled for the current block. The device may generate a position list associated with the ITMP for the current block. The position list may include the plurality of positions. The device may determine a position associated with a reference block based on an intra template matching prediction (ITMP) index and the position list. The device may determine a prediction mode associated with the ITMP. The device may determine a template matching type associated with the position based on the template matching type information. The device may identify a template associated with the position based on the template matching type associated with the position. The device may determine a prediction mode parameter associated with the prediction mode based on the identified template associated with the position. The current block may be predicted further based on the prediction mode parameter.

In examples, the prediction mode may be at least one of a local-Illumination compensation (LIC) ITMP sub-mode, a fusion ITMP sub-mode, a sub-pel ITMP sub-mode, or a linear filtering model ITMP sub-mode. The device may determine that intra template matching prediction (ITMP) is enabled for the current block. The device may generate a position list associated with the ITMP for the current block. The position list may include the plurality of positions. The device may determine a position associated with a reference block and a prediction mode associated with the ITMP for the current block based on the position list, the template matching type information, and a plurality of prediction modes. The device may include, in video data, a position indicator (e.g., intra template matching prediction (ITMP) index) associated with the position and an indicator for the prediction mode.

In examples, the device may obtain template matching metric information associated with the plurality of positions. The current block may be predicted further based on the template matching metric information. The template matching metric information may indicate a difference between a prediction signal generated using a template associated with a block at a position of the plurality of positions and a prediction signal generated using a template of the current block. The template matching type information may indicate whether an above template matching (TM), a left TM, or a full TM is used in association with a respective position of the plurality of positions.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows three types of matchings between the template of *a W* × H reconstructed block and the template of a (e.g., the current) *W* × *H* block to be coded.
FIG. 5 shows a search area for *a W* × *H* luma coding block (CB) predicted via ITMP.
FIG. 6 shows example extraction of the training examples.
FIG. 7 shows support of 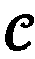 for a reconstructed pixel C inside refBlockPad, in the linear filtering model sub-mode of ITMP.
FIG. 8 shows an example extraction of training examples.
FIG. 9 shows example decoding of a current block predicted by ITMP, in the hybrid block-based video codec of interest.
FIG. 10 shows example decoding of the current block predicted by ITMP in the hybrid block-based video codec of interest.
FIG. 11 shows example decoding of a luma CB predicted by ITMP.
FIG. 12 shows an example ITMP search during the decoding of a (e.g., the current) luma CB predicted by ITMP.
FIG. 13 shows an example ITMP search during the decoding of a (e.g., the current) luma CB predicted by ITMP through aligned substitutions.
FIG. 14 shows example decoding of a (e.g., the current) luma CB predicted by ITMP.
FIG. 15 shows an example ITMP search during the decoding of a (e.g., the current) luma CB predicted by ITMP.
FIG. 16 shows an example LIC sub-mode of ITMP selected to predict a (e.g., the current) *W* × *H* luma CB.
FIG. 17 shows an example LIC sub-mode during the decoding of a (e.g., the current) luma CB predicted by ITMP.FIG. 18 shows an example linear filtering model sub-mode of ITMP selected to predict the current *W* × *H* luma CB.
FIG. 19 shows an example linear filtering model sub-mode during the decoding of the current luma CB predicted by ITMP.
FIG. 20 shows an example sub-pel sub-mode of ITMP selected to predict a (e.g., the current) luma CB.
FIG. 21 shows an example LIC combined with the template matching metric depending on the type of template matching of the single reconstructed block involved in the sub-pel mode.
FIG. 22 shows an example sub-pel sub-mode during the decoding of a (e.g., the current) luma CB predicted by ITMP.
FIG. 23 shows an example fusion sub-mode during the decoding of a (e.g., the current) luma CB predicted by ITMP.
FIG. 24 shows an example fusion sub-mode during the decoding of a (e.g., the current) luma CB predicted by ITMP.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

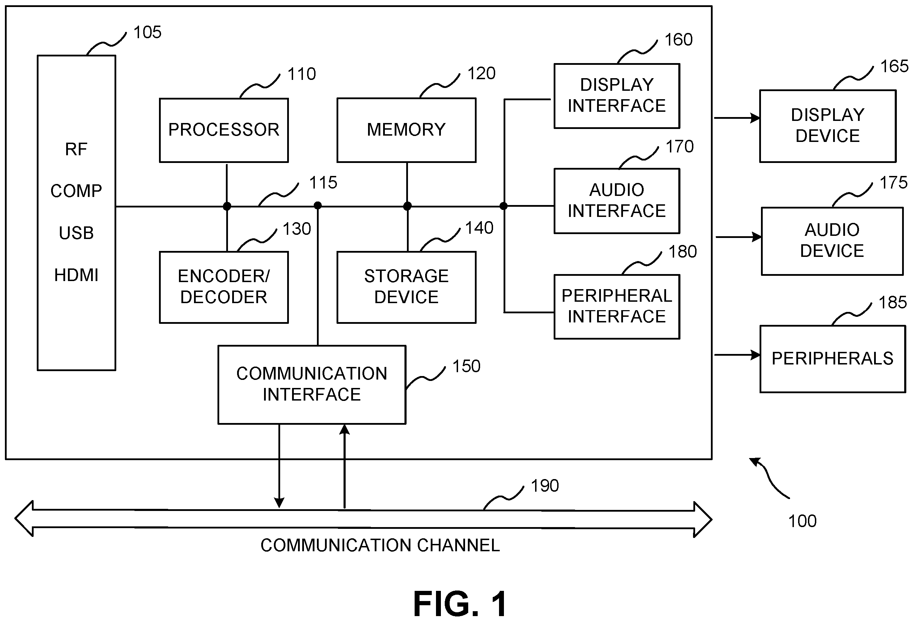

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

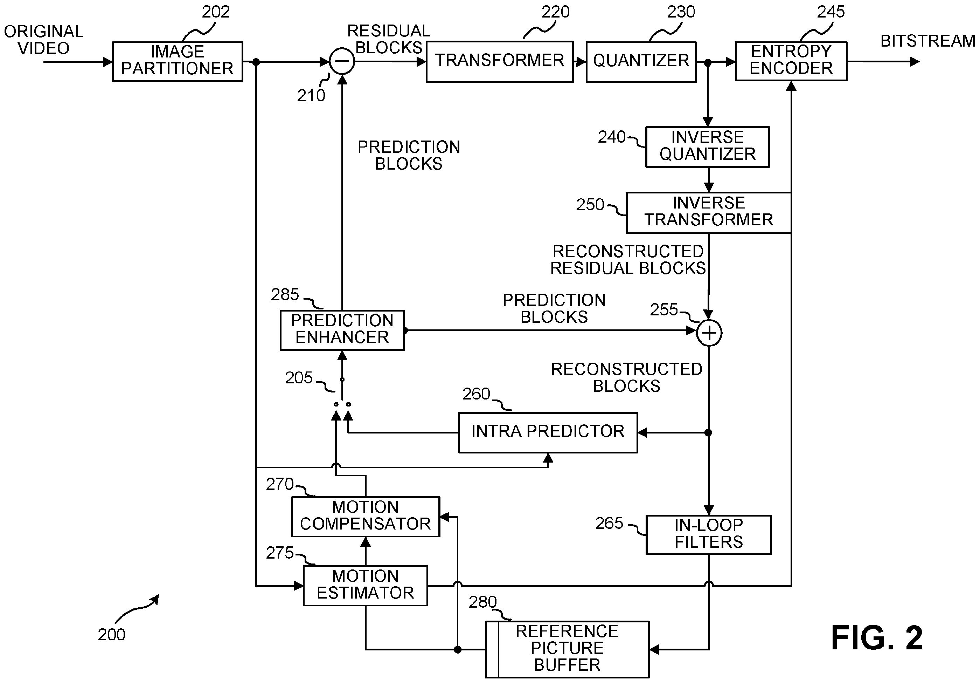

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

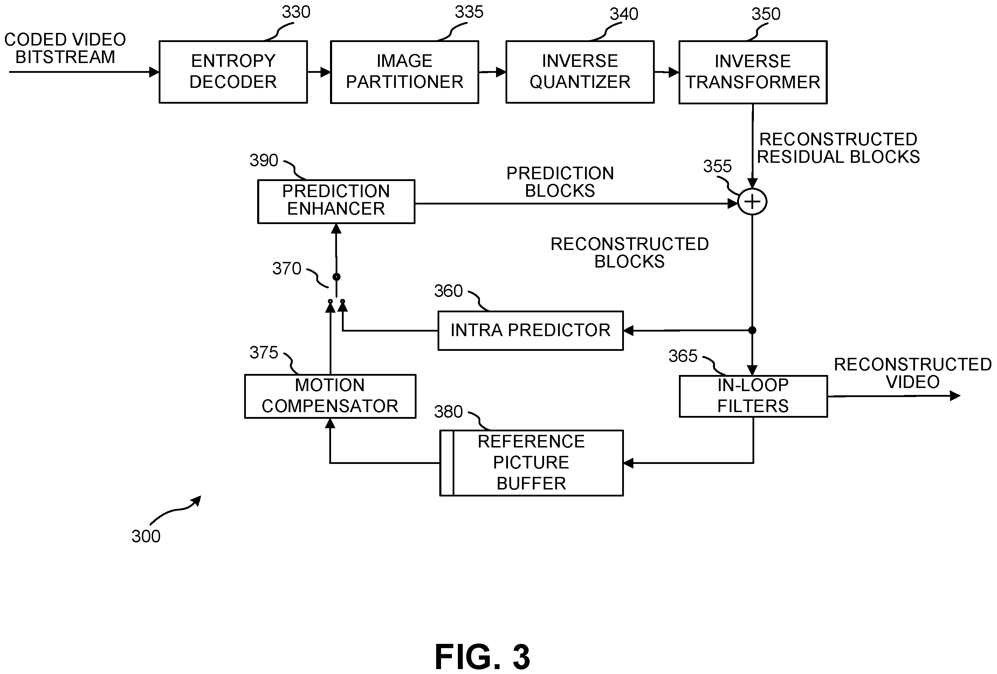

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities associated with intra template matching prediction with persistent template characteristics are provided. The device may include a processor configured obtain template matching type information associated with a plurality of positions in a reconstructed area of a picture. The device may predict a current block based on the template matching type information. The device may decode or encode the current block based on the prediction of the current block.

In examples, the device may perform a first intra template matching prediction (ITMP) based on a first template matching type to identify a first position. The device may associate the first position with the first template matching type. The device may perform a second ITMP based on a second template matching type to identify a second position. The device may associate the second position with the second template matching type. The template matching type information may be configured to indicate that the first position is associated with the first template matching type, and that the second position is associated with and the second template matching type.

In examples, the device may determine, from the plurality of positions, a position based on an intra template matching prediction (ITMP) index. The device may obtain a reference block based on the determined position. The device may obtain a template matching type associated with the position based on the template matching type information. The device may derive a local-Illumination compensation (LIC) parameter based on the template matching type associated with the position. The device may refine the reference block based on the derived LIC parameter. The current block may be predicted using the refined reference block.

In examples, the device may determine, from the plurality of positions, a position based on an intra template matching prediction (ITMP) index. The device may obtain a template based on a template matching type associated with the position. The template matching type information may indicate the template matching type associated with the position. The device may derive a linear filtering parameter using the obtained template. The device may filter a reference sample of the current block based on the derived linear filtering parameter. The current block may be predicted using the filtered reference sample.

In examples, the device may perform a first intra template matching prediction (ITMP) search based on a first template matching (TM) type. The first ITMP may identify a first position of the plurality of positions. The device may store the first TM type associated with the first position in a template matching type list. The device may perform a second ITMP search based on a second TM type. The second ITMP search may identify a second position of the plurality of positions. The device may store the second TM type associated with the second position in the template matching type list. The template matching type information may be stored in the template matching type list and may be configured to indicate that the first TM type is associated with the first position and the second TM type is associated with the second position.

In examples, the reconstructed area may be an ITMP search area. The device may determine that intra template matching prediction (ITMP) is enabled for the current block. The device may generate a position list associated with the ITMP for the current block. The position list may include the plurality of positions. The device may determine a position associated with a reference block based on an intra template matching prediction (ITMP) index and the position list. The device may determine a prediction mode associated with the ITMP. The device may determine a template matching type associated with the position based on the template matching type information. The device may identify a template associated with the position based on the template matching type associated with the position. The device may determine a prediction mode parameter associated with the prediction mode based on the identified template associated with the position. The current block may be predicted further based on the prediction mode parameter.

In examples, the prediction mode may be at least one of a local-Illumination compensation (LIC) ITMP sub-mode, a fusion ITMP sub-mode, a sub-pel ITMP sub-mode, or a linear filtering model ITMP sub-mode. The device may determine that intra template matching prediction (ITMP) is enabled for the current block. The device may generate a position list associated with the ITMP for the current block. The position list may include the plurality of positions. The device may determine a position associated with a reference block and a prediction mode associated with the ITMP for the current block based on the position list, the template matching type information, and a plurality of prediction modes. The device may include, in video data, a position indicator (e.g., intra template matching prediction (ITMP) index) associated with the position and an indicator for the prediction mode.

In examples, the device may obtain template matching metric information associated with the plurality of positions. The current block may be predicted further based on the template matching metric information. The template matching metric information may indicate a difference between a prediction signal generated using a template associated with a block at a position of the plurality of positions and a prediction signal generated using a template of the current block. The template matching type information may indicate whether an above template matching (TM), a left TM, or a full TM is used in association with a respective position of the plurality of positions.

Intra Template Matching Prediction (ITMP) may include an intra prediction mode that predicts a (e.g., the current) block by copying the reconstructed block in the current frame whose L-shaped template optimally (e.g., best) matches the L-shaped template of the current block. The match between the L-shaped template of a reconstructed block and the L-shaped template of the current block may be measured via a predefined metric, e.g., Sum of Absolute Difference (SAD).

At the encoder side, within a search range covering a reconstructed part of the current frame, the encoder may search for the template closest to the template of the current block, in examples, using the predefined template matching metric. The block associated to the template retained by this search may become a prediction of the current block. The encoder may signal in the bitstream the usage of ITMP. At the decoder side, if ITMP is selected to predict the (e.g., same) current block, the (e.g., same) search and/or the (e.g., same) prediction process(es) may be used.

At the decoder side, if ITMP is selected to predict a luma Coding Block (CB), the positions within the current luma channel of the searched reconstructed blocks may be sorted in a list according to their template matching metric. An index previously read from the bitstream may indicate in this list the position within the current luma channel of the reconstructed block chosen for prediction. If the Local-Illumination Compensation (LIC) sub-mode of ITMP is selected to predict this luma CB, the Mean Removed SAD (MR-SAD) may be used as a template matching metric. The SAD may (e.g., otherwise) be used as a template matching metric.

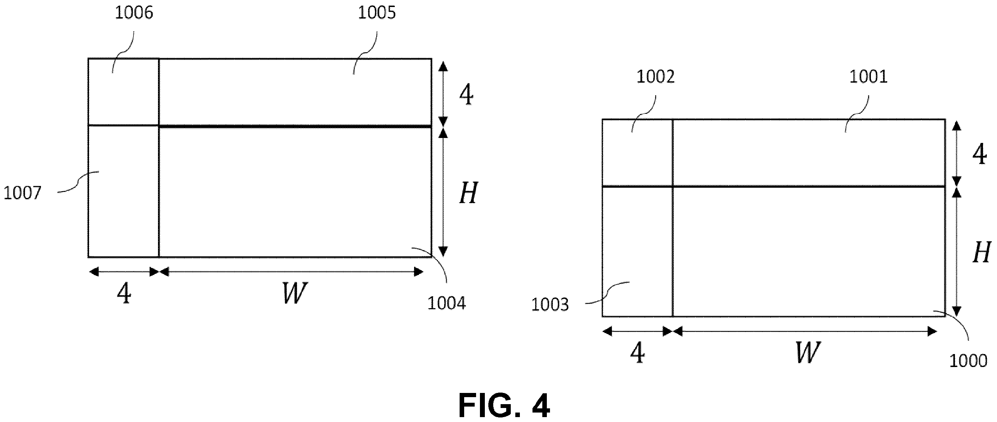

FIG. 4 shows a number of (e.g., three) types of matchings between the template of *a W* × *H* reconstructed block (1004) inside the search area covering a reconstructed part of a (e.g., the current) luma channel and/or the template of the current *W* × *H* luma CB (1000). For the current *W* × *H* luma CB, a number of (e.g., three) types of matchings may exist between the template of *a W* × *H* reconstructed block inside the search area covering a reconstructed part of the current luma channel and the template of the current *W* × *H* luma CB shown in FIG. 4. In FIG. 4, a (e.g., first) type of matching may involve the template matching metric between the above portion (1005) of the template of this *W* × *H* reconstructed block (1004) and the above portion (1001) of the template of the current *W* × *H* luma CB (1000). This metric may be denoted 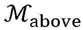 . A (e.g., second) type of matching may involve the template matching metric between the left portion (1007) of the template of (1004) and the left portion (1003) of the template of (1000). This metric may be denoted 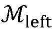 . The third type of matching involves the template matching metric between the template gathering (1005), (1006), and/or (1007) of (1004) and the template gathering (1001), (1002), and/or (1003) of (1000), this metric being denoted 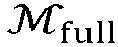 .

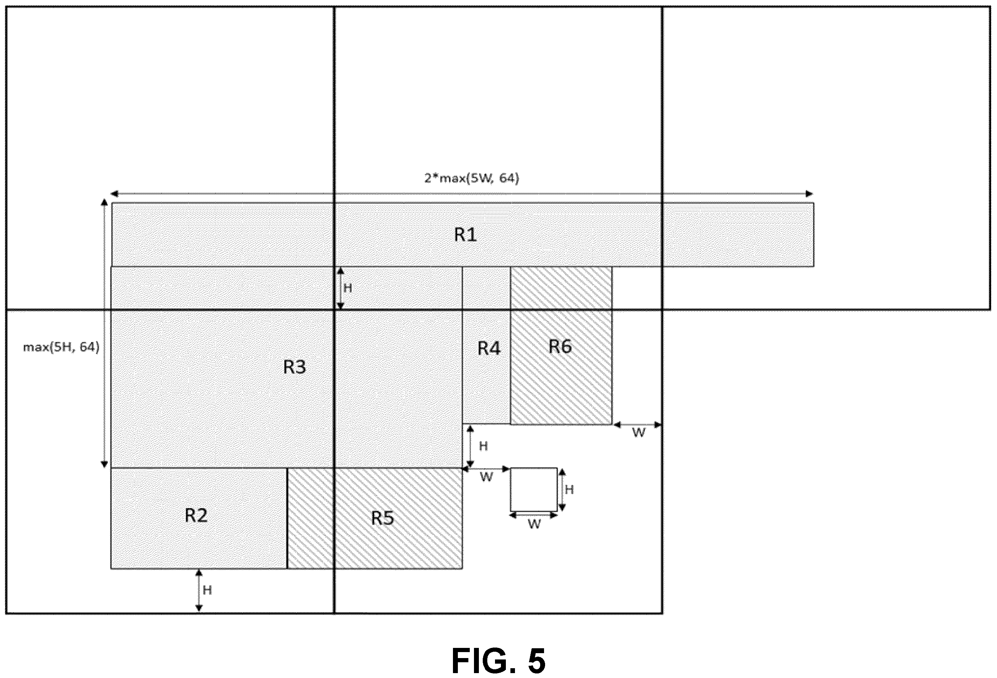

FIG. 5 shows a search area for *a W* × *H* luma CB predicted via ITMP. For the current *W* × *H* luma CB, the definition of the search area may depend on *W* and/or *H* as shown in FIG.5. This search area may be split into a number of (e.g., 6) sub-areas, denoted R1 to R6 in FIG. 5.

In some examples, for the current *W* × *H* luma CB, the ITMP search may be performed by calculating the template matching metric for each reconstructed block belonging to the search area, scanning by step $n ∈ ℕ *$ pixels horizontally/vertically.

In some examples, hierarchical search may be performed. The ITMP search may be decomposed into a sparse search and a subsequent refined search.

A dense search may be performed. In a sparse search, a number of (e.g., the 6 regions) may be scanned in an order (e.g., the following order: R4, R5, R6, R1, R2, and R3). In each of these regions, scanning by step *ε* pixels horizontally/vertically, for each scanned reconstructed block, 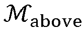 , 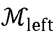 , and 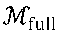 between the template of this scanned reconstructed block and the template of the current luma CB may be computed. In Random Access (RA) configuration, *ε* may equal a value (e.g., 3). In other configurations, for example, *ε* may equal a value (e.g., 4). The sparse search may sort in a list 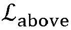 the positions within the current luma channel of the ζ scanned reconstructed blocks in an order (e.g., with smallest 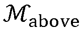 in ascending order). The "position" within the current luma channel of a reconstructed block may refer to the pair of the horizontal and/or vertical shifts of the pixel at the top-left of this reconstructed block with respect to the coordinates in the current luma channel of the pixel at the top-left of the current luma CB. It also sorts in a list 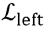 the positions within the current luma channel of the ζ scanned reconstructed blocks with smallest 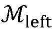 in ascending order. It also may sort in a list 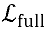 the positions within the current luma channel of the *ε* scanned reconstructed blocks with smallest 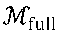 in ascending order. In RA configuration, if the LIC sub-mode of ITMP is selected to predict the current luma CB, ζ may equal a value (e.g., 3) and *ε* may equal a value (e.g., 15). Otherwise, ζ may equal a value (e.g., 6) and/or *ε* may equal a value (e.g., 30).

A merge search may be performed. Following the sparse search, for each available so-called "merge" reconstructed block, 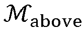 , 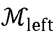 , and 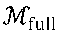 between the template of this "merge" reconstructed block and the template of the current luma CB are computed. 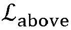 , 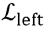 , and 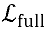 may be updated accordingly. A "merge" reconstructed block may refer to a reconstructed block whose position is pointed by the block vector of a previously decoded luma CB selecting either ITMP or Intra Block Copy (IBC) for prediction after translating this block vector from the position of this previously decoded luma CB to the position of the current luma CB.

A refined search may be performed. In a refined search, for each position stored in 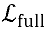 , scanning by step 1 pixel horizontally and/or vertically within a reduced range around this position, for each scanned reconstructed block, 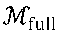 between the template of this scanned reconstructed block and the template of the current luma CB may be calculated. The refined search may sort in a list 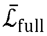 the positions within the current luma channel of the scanned reconstructed blocks in an order (e.g., with smallest 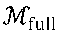 in ascending order). The size of 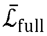 may be a value (e.g., 19). The same process may be repeated but replacing 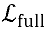 by 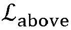 , 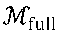 by 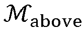 , and 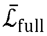 by 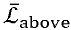 . The size of 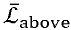 may be equal to a value (e.g., 3). The same process may be repeated but replacing 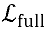 by 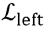 , 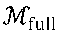 by 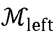 , and 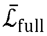 by 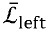 . The size of 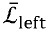 may be equal to a value (e.g., 3).

A list substitution may be performed. Following the refined search, the last number of (e.g., 6) positions (e.g., at most) in 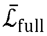 starting from an index (e.g., the index 13) in 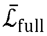 may be overwritten by the positions in { 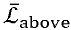 , 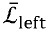 }. The term "at most" may indicate that, if a redundancy exists between a position in 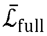 and a position in { 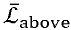 , 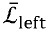 }, this position in { 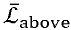 , 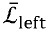 } may be ignored instead of overwritten. The 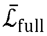 resulting from this overwriting step may correspond to a list (e.g., the final list) of a number of (e.g., 19) positions within the current luma channel of reconstructed blocks retained by the ITMP search.

At the decoder side, provided the read syntax of ITMP, it may be determined whether 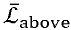 and 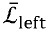 appear in the portion of 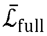 being used for prediction. If not, 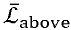 and 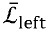 may not be created and/or the computations of 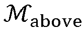 and 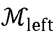 may be ignored.

For a luma CB, if the LIC sub-mode is selected to predict this luma CB, as the MR-SAD is used as template matching metric, 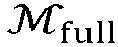 , 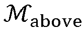 , and 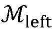 may be re-written MRSAD_{full}, MRSAD_{above}, and MRSAD_{left} respectively. If the LIC sub-mode is not selected to predict this luma CB, as the SAD is used as template matching metric, 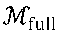 , 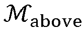 , and 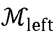 may be rewritten as SAD_{full}, SAD_{above}, and SAD_{left} respectively.

At the encoder side, for a luma CB, an entire ITMP search may be run with the SAD as template matching metric, yielding the final list 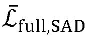 and/or an entire ITMP search may be run with the MR-SAD as template matching metric, yielding the final list 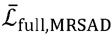 . At the encoder side, if the current luma CB is predicted via the LIC sub-mode, 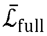 may equal 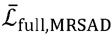 . 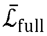 may (e.g., otherwise) equal 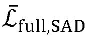 .

ITMP may feature a number of sub-modes. For example, a default sub-mode may include a single reconstructed block, whose position within the current luma channel may be picked from 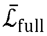 , may become a prediction of the current luma CB. An LIC sub-mode may include a single reconstructed block, whose position within the current luma channel may be picked from 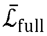 , may be scaled and/or offset, yielding a prediction of the current luma CB. A fusion sub-mode may include multiple reconstructed blocks, whose positions within the current luma channel may be picked from 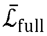 , may be combined, yielding a prediction of the current luma CB. A sub-pel sub-mode may include a fractional interpolation filter which may apply to a single reconstructed block, whose position within the current luma channel may be picked from 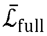 , yielding a prediction of the current luma CB. A linear filtering model sub-mode may include a learned linear filter which may apply to a single reconstructed block whose position within the current luma channel may be picked from 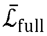 , yielding a prediction of the current luma CB.

The prediction using the LIC sub-mode for a luma CB may be written as $predBlock = clip \left(\left(\left(α refBlock\right)≫5\right)+β,0,1023\right)$ where refBlock may denote the reconstructed block with position 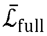 [intra_tmp_idx] within the current luma channel, $intra _ tmp _ idx ∈ \left〚0, 18\right〛$ may be read from the bitstream, $α ∈ ℕ$ may denote the scale. $β ∈ ℤ$ may denote the offset. clip( . , 0, 1023) may denote the elementwise clipping between 0 and 1023, for example. LIC parameters α and *β* may be derived (e.g., learned from) the template of refBlock and the template of this luma CB.

The fusion sub-mode of ITMP may include the fusion via filtering and/or the fusion via blending.

The prediction of fusion via filtering for a luma CB may be $predBlock = clip \left(\left(\left({\sum }_{i = 0}^{m - 1} {w}_{i} \left({refBlock}_{i}-{refAL}_{i}\right)\right)+{w}_{m}b+\left(1≪15\right)\right)≫16,0,1023\right)$ where, for $i ∈ \left〚0,m-1\right〛 , m ∈ \left〚0, 5\right〛$, refBlock*ᵢ* may denote the reconstructed block of index i with position 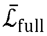 [5 (intra_tmp_fusion_idx - 3) + i] within the current luma channel, $intra _ tmp _ fusion _ idx ∈ \left〚0, 6\right〛$ being read from the bitstream. refAL*ᵢ* may denote the reconstructed pixel on the above-left side of the pixel at the top-left of refBlock*ᵢ*. For bit depth 10, b = 512.

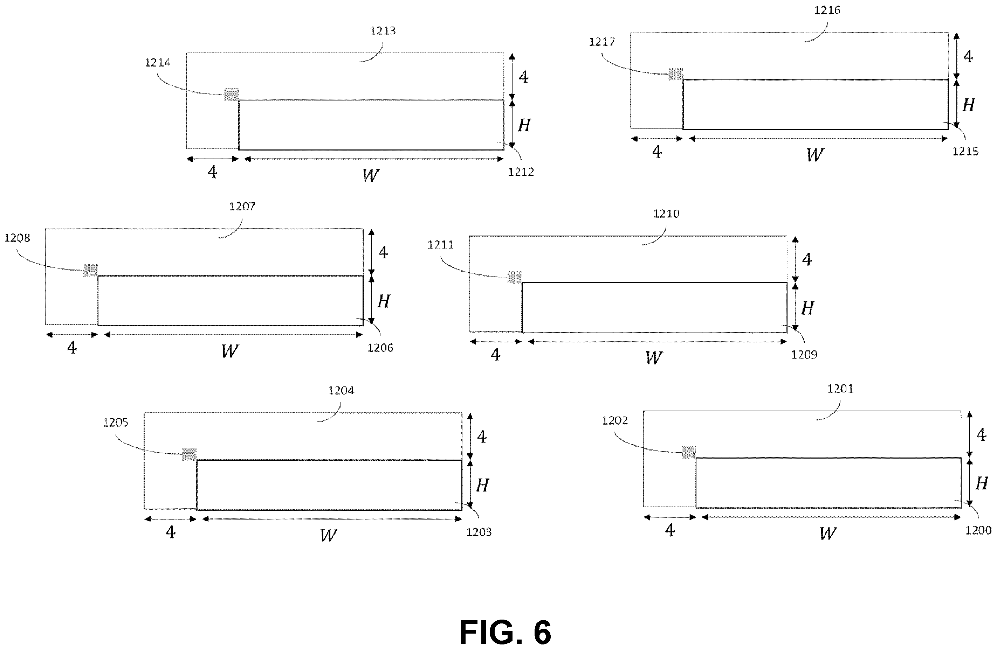

FIG. 6 shows extraction of the training examples. An example (e.g., each example) may correspond to a pair of a set of collocated samples inside the m templates of the *m W* × *H* reconstructed blocks and/or the collocated "target" sample inside the template of the current *W* × *H* luma CB, for learning the filter coefficients in the fusion via filtering sub-mode of ITMP.

The filter coefficients ${\left\{{w}_{i}\right\}}_{i ∈ \left〚0, m\right〛}$ may be derived (e.g., learned by) minimizing the Mean Squared Error (MSE) between the filtered version of the m templates of the m reconstructed blocks and the template of this luma CB. For the current *W* × *H* luma CB (1200), for each sample position in the template (1201) of (1200), the set of collocated samples {(1205), (1208), (1211), (1214), (1217)} belonging respectively to the template (1204) of the reconstructed block (1203), the template (1207) of the reconstructed block (1206), the template (1210) of the reconstructed block (1209), the template (1213) of the reconstructed block (1212), and the template (1216) of the reconstructed block (1215), may be collected with the collocated "target" sample (1202) belonging to the template (1201) of (1200), as a training example. The filter coefficients may be learned by reducing (e.g., minimizing) the MSE between the output of the filtering of {(1205), (1208), (1211), (1214), (1217)} and the associated "target" sample (1202), over all the collected training examples.

A combination of fusion via filtering and LIC may be provided. The combination of LIC and the fusion via filtering may be allowed. If LIC and the fusion via filtering are selected to predict the current luma CB, $predBlock = clip \left(\left(\left({\sum }_{i = 0}^{m - 1} {w}_{i} \left({\overline{refBlock}}_{i}-{\overline{refAL}}_{i}\right)\right)+{w}_{m}b+\left(1≪15\right)\right)≫16,0,1023\right)$ ${\overline{refBlock}}_{i} = clip \left(\left(\left({α}_{i} {refBlock}_{i}\right)≫5\right)+{β}_{i}, 0, 1023\right)$ ${\overline{refAL}}_{i} = clip \left(\left(\left({α}_{i} {refAL}_{i}\right)≫5\right)+{β}_{i}, 0, 1023\right)$ where, for $i ∈ \left〚0, m-1\right〛 , {α}_{i} ∈ ℕ$ and ${β}_{i} ∈ ℤ$ may denote respectively the scale and the offset associated to refBlock*ᵢ*. During the learning of the filter coefficients ${\left\{{w}_{i}\right\}}_{i ∈ \left〚0, m\right〛}$, before collecting the training examples, LIC with scale αᵢ and offset β*ᵢ* may apply to the template of refBlock*ᵢ*.

A prediction of fusion via blending for a luma CB may be formulated as $predBlock = \left(\left({\sum }_{i = 0}^{m - 1} {γ}_{i} {refBlock}_{i}\right)+\left(1≪5\right)\right) ≫ 6$ where, for $i ∈ \left〚0, m-1\right〛 , m ∈ \left〚0, 5\right〛$, refBlock*ᵢ* may denote the reconstructed block of index i with position 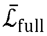 [5 intra_tmp_fusion_idx + i] within the current luma channel, $intra _ tmp _ fusion _ idx ∈ \left〚0, 6\right〛$ being read from the bitstream.

For $i ∈ \left〚0, m-1\right〛$*,* 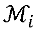 may denote the template matching metric value for refBlock*ᵢ*. The blending coefficient γᵢ may be equal to an integer form of the normalization ratio ${M}_{i} / \left({\sum }_{j = 0}^{m - 1} {M}_{j}\right)$. The conversion of this normalization ratio into integer may be identical to that used in Decoder Side Intra Mode Derivation (DIMD).

The combination of LIC and the fusion via blending may be allowed. If LIC and the fusion via blending are selected to predict the current luma CB, $predBlock = \left(\left({\sum }_{i = 0}^{m - 1} {γ}_{i} {\overline{refBlock}}_{i}\right)+\left(1≪5\right)\right) ≫ 6$ ${\overline{refBlock}}_{i} = clip \left(\left(\left({α}_{i} {refBlock}_{i}\right)≫5\right)+{β}_{i}, 0, 1023\right)$ where, for $i ∈ \left〚0,m-1\right〛 , {α}_{i} ∈ ℕ$ and ${β}_{i} ∈ ℤ$ may denote respectively the scale and the offset associated to refBlock*ᵢ*.

A prediction of Sub-pel for a luma CB may be expressed as $\left\{\begin{matrix}predBlock = clip \left(\left(\left(refBlockPad∗{f}_{p , d}\right)+\left(1≪7\right)\right)≫8,0,1023\right) , if d ∈ \left\{LEFT_POS,RIGHT_POS\right\} \\ predBlock = clip \left(\left(\left(refBlockPad∗{g}_{p , d}\right)+\left(1≪7\right)\right)≫8,0,1023\right) , if d ∈ \left\{ABOVE_POS,BOTTOM_POS\right\} \left(∗\right) \\ predBlock = clip \left(\left(\left(clip\left(\left(\left(refBlockPad∗{f}_{p , d}\right)+\left(1≪7\right)\right)≫8,0,1023\right)∗{g}_{p , d}\right)+\left(1≪7\right)\right)≫8,0,1023\right) otherwise .\end{matrix}\right.$

refBlockPad may denote a padded version of the reconstructed block refBlock with position 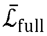 [intra_tmp_idx] within the current luma channel, $intra _ tmp _ idx ∈ \left〚0, 18\right〛$ being read from the bitstream. * may denote the valid convolution. *f*_{*p*,*d*} may denote the 1D 8-tap horizontal fractional interpolation filter for precision $p ∈ \left\{\frac{1}{2}pel,\frac{1}{4}pel\right\}$ and/or direction d. *g*_{*p*,*d*} may denote the 1D 8-tap vertical fractional interpolation filter for precision $p ∈ \left\{\frac{1}{2}pel,\frac{1}{4}pel\right\}$ and/or direction *d. d* ∈ {LEFT_POS, RIGHT_POS, ABOVE_POS, BOTTOM _POS, ABOVE_LEFT_POS, ABOVE_RIGHT_POS, LEFT _BOTTOM_POS, ABOVE_RIGHT_POS}, may refer respectively to left, right, above, bottom, above-left, above-right, bottom-left, and bottom-right directions. Therefore, out of a number of (e.g., 16) possible filterings, one fractional interpolation filtering characterized by the pair *(p, d)* of parameters may be picked to predict a (e.g., this) luma CB.

For a (e.g., this) luma CB, to learn the pair (p, *d)* of parameters, Table 1 may apply.

**Table 1: learning of the pair (p, d) of parameters for a luma CB selecting ITMP, LIC and sub-pel for prediction.**

| |
|---|
| 1. For each of a number of (e.g., the 16) possible filterings, the 4-tap version of this filtering may apply to a padded version of the template of refBlock, and/or the template matching metric 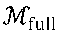 = SAD_{full} between the result of this filtering and the template of this luma CB may be computed. |
| 2. The pairs of parameters of the 16 possible filterings may be sorted in an order (e.g., ascending order of 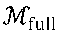 ). |
| 3. The sub-list 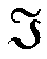 may gather a number of (e.g., the first two) pairs of parameters from the previously sorted list. |
| 4. The pair (p, d) = 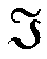 [**intra_tmp_frac_idx**] may be chosen to predict this luma CB, intra_tmp_frac_idx ∈ {0, 1} being either inferred or read from the bitstream. |

The combination of LIC and sub-pel may be allowed. If LIC and sub-pel are selected to predict the current luma CB, the prediction of a (e.g., the current) luma CB may be denoted as predBlock. $\overline{predBlock} = clip \left(\left(\left(α predBlock\right)≫5\right)+β, 0, 1023\right)$ where predBlock may arise from Equation (*). $α ∈ ℕ$ may denote the scale. $β ∈ ℤ$ may denote the offset. During the learning of the pair *(p, d)* of parameters, 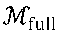 = MRSAD_{full}.

A prediction of a linear filtering model for a luma CB may be:

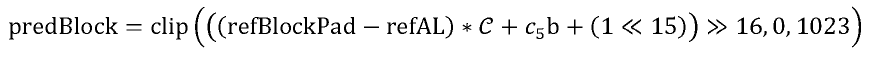

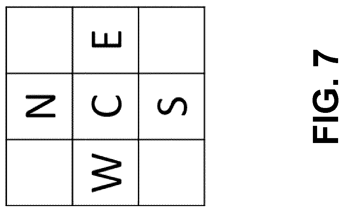

FIG. 7 shows support of 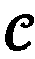 for a reconstructed pixel C inside refBlockPad, in the linear filtering model sub-mode of ITMP. refBlockPad may denote a padded version of the reconstructed block refBlock with position 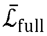 [intra_tmp_idx] within the current luma channel, intra_tmp_idx ∈ $\left〚0, 18\right〛$ being read from the bitstream. refAL may denote the reconstructed pixel on the above-left side of the pixel at the top-left of refBlock. * may denote the valid convolution. C may denote the 2D filter comprising coefficients ${\left\{{c}_{i}\right\}}_{i ∈ \left〚0, 4\right〛}$. For bit depth 10, b = 512. For a reconstructed pixel C belonging to refBlockPad, the support of 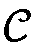 may be depicted in FIG. 7.

At the position of C,

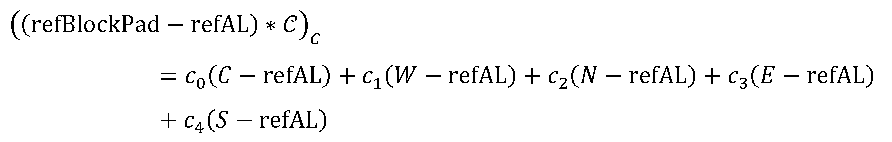

The coefficients ${\left\{{c}_{i}\right\}}_{i ∈ \left〚0, 5\right〛}$, may be learned by reducing (e.g., minimizing) the MSE between the filtered version of the padded template of refBlock and the template of this luma CB.

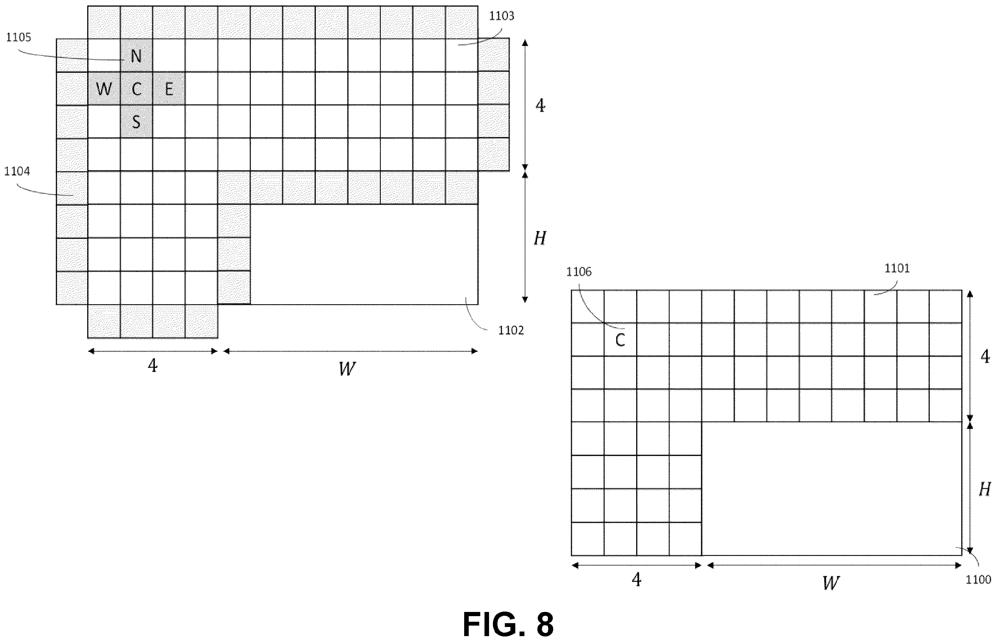

FIG. 8 shows an extraction of training examples. An (e.g., each) example may correspond to the pair of the set of samples {N, C, S, E, W} inside the template of the *W* × *H* reconstructed block and the collocated "target" sample inside the template of the current *W* × *H* luma CB, for learning the filter coefficients in the linear filtering model sub-mode of ITMP. As shown in FIG. 8, for the current *W* × *H* luma CB (1100), for each position C in the template (1103) of *the W* × *H* reconstructed block (1102), the pair of the set of samples {N, C, S, E, W} (1105) inside (1103) and the collocated "target" sample (1106) inside the template (1101) of (1100) may be collected as a training example. The filter coefficients may be learned by reducing (e.g., minimizing) the MSE between the output of the filtering of {N, C, S, E, W} and the associated "target" sample, over all the collected training examples. As the pattern (1105) may go out of the bounds of (1103), (1103) may be supplemented with the samples (1104). A sample in (1104) may be either reconstructed or padded from neighboring samples, depending on its availability.

ITMP signaling may be provided. If the current Coding Unit (CU) is predicted in intra, its height may be smaller than 64 and its width may be smaller than 64. Neither the neural network-based intra prediction mode nor DIMD may be selected to predict the current luma CB. ITMP may be signaled via a flag shown in Table 2. If the ITMP flag is true (e.g., ITMP is selected to predict the current luma CB), the rest of the intra prediction modes may be inferred as unused.

**Table 2: signaling of ITMP for the current luma CB if the current CU is predicted in intra, its height may be smaller than 64 and its width may be smaller than 64, and neither neural network-based intra prediction mode nor DIMD may be selected to predict the current luma CB.**

| |
|---|
| ... |
| **intra_tmp_flag** |
| if (intra_tmp_flag) { |
| **intra_tmp_fusion_flag** |
| if (intra_tmp_fusion_flag) { |
| **intra_tmp_fusion_idx** |
| **intra_tmp_lic_flag** |
| } else { |
| **intra_tmp_idx** |
| **intra_tmp_filter_flag** |
| if (!intra_tmp_filter_flag) { |
| **intra_tmp_lic_flag** |
| if (intra_tmp_lic_flag && isltmpLicExtension) { |
| **intra_tmp_lic_index** |
| } |
| **intra_tmp_frac_idx** |
| } |
| } |
| } |
| ... |

intra_tmp_flag: ITMP flag. If it is true, ITMP may be selected to predict the current luma CB. If it is false, ITMP may not be selected to predict the current luma CB.

intra_tmp_fusion_flag: ITMP fusion flag. If it is true, the fusion sub-mode may be selected to predict the current luma CB. If it is false, the fusion sub-mode may not be selected to predict the current luma CB.

intra_tmp_fusion_idx: ITMP fusion index, belonging to [|0, 5|]. intra_tmp_fusion_idx in [|0, 2|] may mean that the fusion via blending is used. intra_tmp_fusion_idx in [|3, 5|] may mean that the fusion via filtering is used. For the current luma CB, in 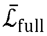 , the indices of the positions within the current luma channel of the reconstructed blocks involved in the fusion are (e.g., always) consecutive(s). This means that only the index in 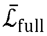 of the position within the current luma channel of the first reconstructed block involved in the fusion may (e.g., must) be signaled via intra_tmp_fusion_idx. If intra_tmp_fusion_idx in [|0, 2|], 5*intra_tmp_fusion_idx may be the index in 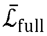 of the position within the current luma channel of the first reconstructed block involved in the fusion via blending. If intra_tmp_fusion_idx in [|3, 5|], 5*(intra_tmp_fusion_idx - 3) may be the index in 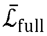 of the position within the current luma channel of the first reconstructed block involved in the fusion via filtering.

intra_tmp_idx: index in 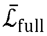 of the position within the current luma channel of the single reconstructed block used for prediction. intra_tmp_idx may belong to [|0, 18|].

intra_tmp_filter_flag: ITMP linear-filtering-model flag. If it is true, the linear filtering model sub-mode may be selected to predict the current luma CB. If it is false, the linear filtering model sub-mode may not be selected to predict the current luma CB.

intra_tmp_lic_flag: ITMP LIC flag. If it is true, LIC may be selected to predict the current luma CB. If it is false, LIC may not be selected to predict the current luma CB.

isltmpLicExtension: boolean indicating whether the LIC multiple linear models are activated.

intra_tmp_lic_index: ITMP LIC index, belonging to [|0, 3|]. It may indicate which of the 4 LIC models is used.

intra_tmp_frac_idx: ITMP fractional interpolation index, belonging to {0, 1}. *(p, d)* = 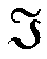 [**intra_tmp_frac_idx**]. If the size of the current luma CB is larger than 128, intra_tmp_frac_idx may be 0. Otherwise, intra_tmp_frac_idx may be read from video data (e.g., the bitstream).

In Intra Block Copy (IBC), at the encoder side, for a block, block matching search may find the optimal block vector (or motion vector). A block vector may indicate the displacement from the current block to a reference block, which may be (e.g., already) reconstructed inside the current frame. If this block selects IBC for prediction, the optimal block vector may be written to the bitstream. At the decoder side, for this block selecting IBC for prediction, as the optimal block vector is read from the bitstream, block matching search may not be needed.

For a luma CB predicted via ITMP, following the ITMP search, the head of the final list 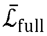 may contain positions within the current luma channel of reconstructed blocks associated to the smallest 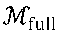 values whereas the tail of 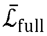 may contain positions within the current luma channel of reconstructed

blocks associated to the smallest 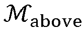 values or the smallest 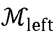 values. Even though, in 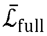 , the different positions within the current luma channel of reconstructed blocks may result from the minimizations of different types of template matchings, these different positions within the current luma channel of reconstructed blocks may be treated indifferently as regards the type of template matching if running the ITMP sub-modes.

For a block predicted via ITMP, for positions within the current frame of reconstructed blocks belonging to the final list 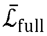 , the types of template matching associated to these positions may be stored. These types of template matching may be passed on to the ITMP sub-modes. For a reconstructed block whose position within the current frame belongs to 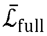 , the processes of the different ITMP sub-modes may be tailored to its type of template matching.

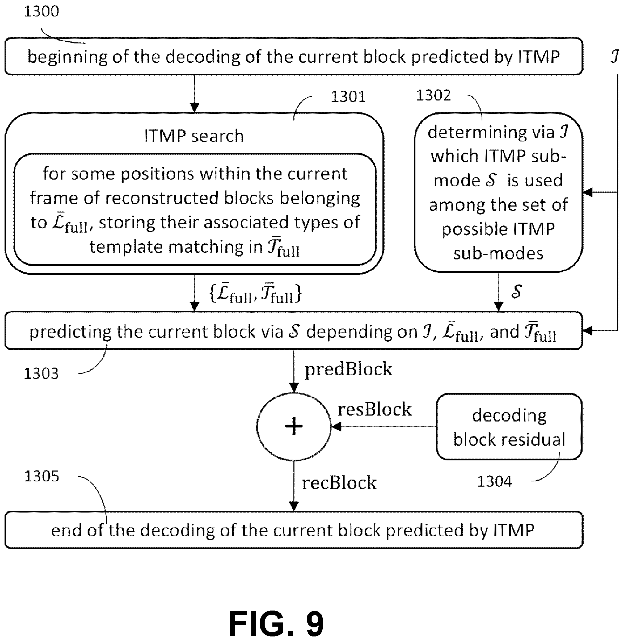

The types of template matching for the positions identified via template matching may be stored and used in the ITMP sub-modes. FIG. 9 shows example decoding of a current block predicted by ITMP, in the hybrid block-based video codec of interest. For a block predicted via ITMP, for positions within the current frame of reconstructed blocks belonging to the final list 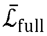 , the types of template matching linked to these positions may be stored. These types of template matching may be used in ITMP sub-modes to predict the current block. The decoding of the current block predicted via ITMP may be shown in FIG. 9.

At (1300), the decoding of the current block predicted via ITMP may begin. At (1301), the ITMP search for the current block may be run and, for some positions within the current frame of reconstructed blocks belonging to 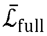 , 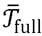 may store their associated types of template matching. At (1302), the used ITMP sub-mode 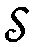 among the set of possible ITMP sub-modes may be determined via the set 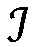 of ITMP sub-modes flags and indices. At (1303), the current block may be predicted via S depending on 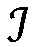 , 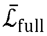 , and 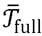 , yielding a prediction predBlock of the current block. At (1304), the residual associated to the current block may be decoded, yielding a decoded residual resBlock. Then, recBlock = predBlock + resBlock. At (1305), the decoding of the current block predicted via ITMP may end. In FIG. 9, (1302) may be executed at any time before (1303), even before (1300). At the encoder side, the current block may be encoded based on the predicted block.

Storage of the types of template matching may be separated from the ITMP search. FIG. 9 may present the storage of the types of template matching as part of the ITMP search process. The ITMP search and the storage of the types of template matching may be separated.

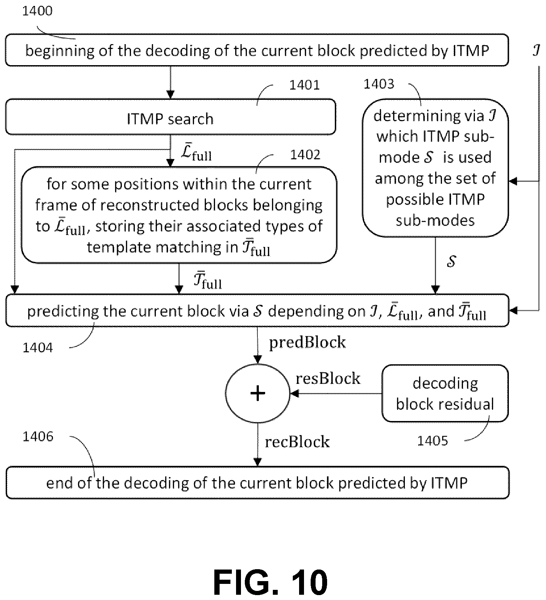

FIG. 10 shows example decoding of the current block predicted by ITMP in the hybrid block-based video codec of interest. In FIG. 10, the storage of the types of template matching (1402) may be after the ITMP search (1401), for example.

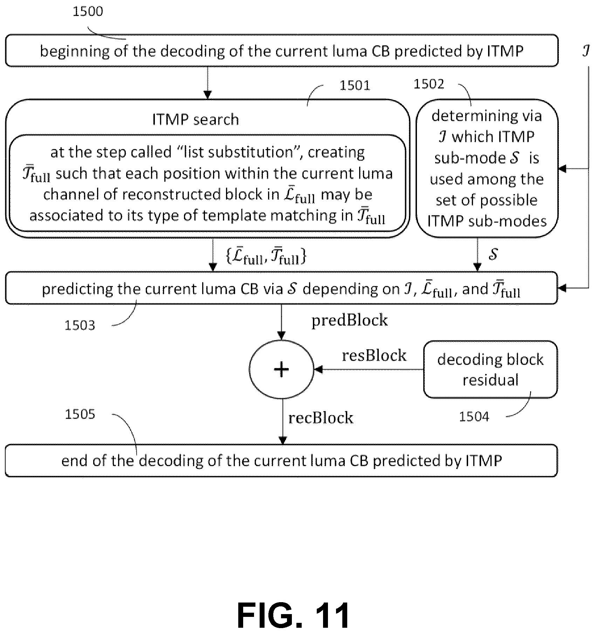

FIG. 11 shows example decoding of a luma CB predicted by ITMP. At (1500), the decoding of the current luma CB predicted via ITMP may begin. At (1501), the ITMP search for the current luma CB may be run and, at the step called "list substitution", 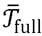 may be created such that each position within the current luma channel of reconstructed block in 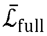 may be associated to its type of template matching in 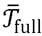 . For instance, card( 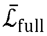 ) = card( 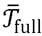 ) and, for $i ∈ \left〚0, card\left({\overline{L}}_{full}\right)-1\right〛$, 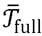 [i] may be the type of template matching of the reconstructed block with position 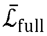 [*i*] within the current luma channel. card( 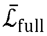 ) may denote the cardinality of 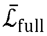 , in other words the size of 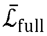 . In examples, card( 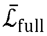 ) may equal a value (e.g., 12 or 19).

At (1502), the used ITMP sub-mode 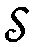 among the set of possible ITMP sub-modes may be determined via the set 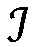 of ITMP sub-modes flags and indices. In examples, the set of possible ITMP sub-modes may be {default, LIC, fusion via filtering, fusion via filtering and LIC, fusion via blending, fusion via blending and LIC, sub-pel, sub-pel and LIC, linear filtering model} and 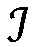 may be given by Table 2. In examples, without the sub-pel sub-mode, the set of possible ITMP sub-modes may be {default, LIC, fusion via filtering, fusion via filtering and LIC, fusion via blending, fusion via blending and LIC, linear filtering model} and 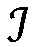 may be illustrated by Table 2 without intra_tmp_frac_idx. In examples without the linear filtering model sub-mode, the set of possible ITMP sub-modes may be {default, LIC, fusion via filtering, fusion via filtering and LIC, fusion via blending, fusion via blending and LIC, sub-pel, sub-pel and LIC} and 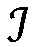 may be provided by Table 2 without intra_tmp_filter_flag and its associated "if" statement.

At (1503), the current luma CB may be predicted via 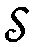 depending on 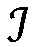 , 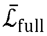 , and 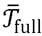 , yielding a prediction predBlock of the current luma CB. At (1504), the residual associated to the current luma CB may be decoded, yielding a decoded residual resBlock. recBlock = predBlock + resBlock. At (1505), the decoding of the current luma CB predicted via ITMP may end.

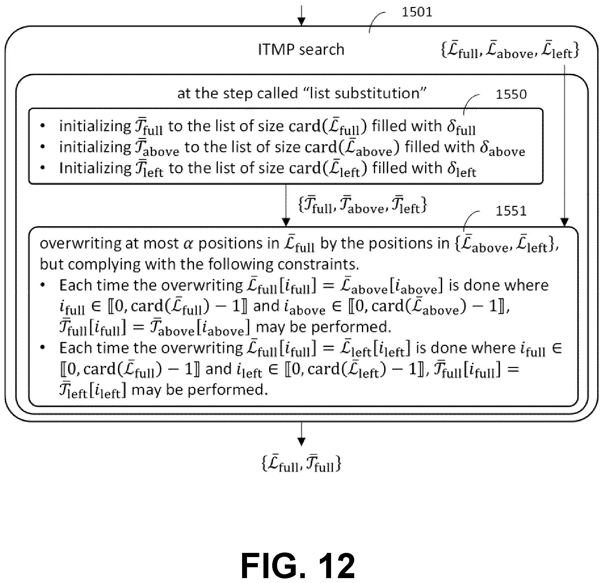

The list of types of template matching may be created through aligned substitutions. For a luma CB predicted via ITMP, during the step called "list substitution", 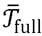 may be created through substitutions aligned with the substitutions in 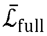 . "Aligned" may mean that the same indices may be involved in the substitutions in 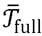 and those in 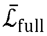 shown in FIG. 11 and FIG. 12, for example.

FIG. 12 shows an ITMP search during the decoding of the a (e.g., the current) luma CB predicted by ITMP. In FIG. 12, the "list substitution" operation may include the following process(es).

At (1550), 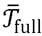 may be initialized to the list of size card( 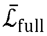 ) filled with δ_{full}. 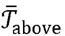 may be initialized to the list of size card( 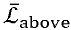 ) filled with δ_{above}. 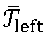 may be initialized to the list of size card( 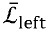 ) filled with δ_{left}. In examples, card( 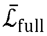 ) = 19 and card( 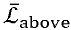 ) = card( 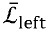 ) = 3. In examples, card( 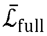 ) = 12 and card( 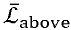 ) = card( 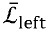 ) = 2. In examples, card( 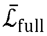 ) = 16, card( 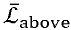 ) = 4, and card( 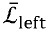 ) = 2. In examples, δ_{full} = 0, δ_{above} = 1, and δ_{left} = 2. In examples, δ_{full} = 0, δ_{above} = -1, and δ_{left} = 1. In examples, δ_{full} = 0, δ_{above} = 2, and δ_{left} = 1.

At (1551), at most α positions in 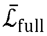 may be overwritten by the positions in { 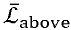 , 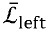 }, but under the following constraints.

Each time the overwriting 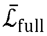 [*i*_{full}] = 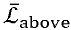 [*i*_{above}] is done where ${i}_{full} ∈ \left〚0, card\left({\overline{L}}_{full}\right)-\right.$ $\left.1\right〛$ and ${i}_{above} ∈ \left〚0, card\left({\overline{L}}_{above}\right)-1\right〛$, 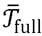 [*i*_{full}] = 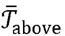 [*i*_{above}] may be performed.

Each time the overwriting 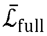 [*i*_{full}] = 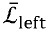 [*i*_{left}] is done where ${i}_{full} ∈ \left〚0, card\left({\overline{L}}_{full}\right)-1\right〛$ and ${i}_{left} ∈ \left〚0, card\left({\overline{L}}_{left}\right)-1\right〛$, 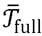 [*i*_{full}] = 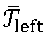 [*i*_{left}] may be performed.

In examples, at most the last α positions in 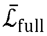 may be overwritten. In examples, α = 6. In examples, α = 4. In examples, α *=* 2.

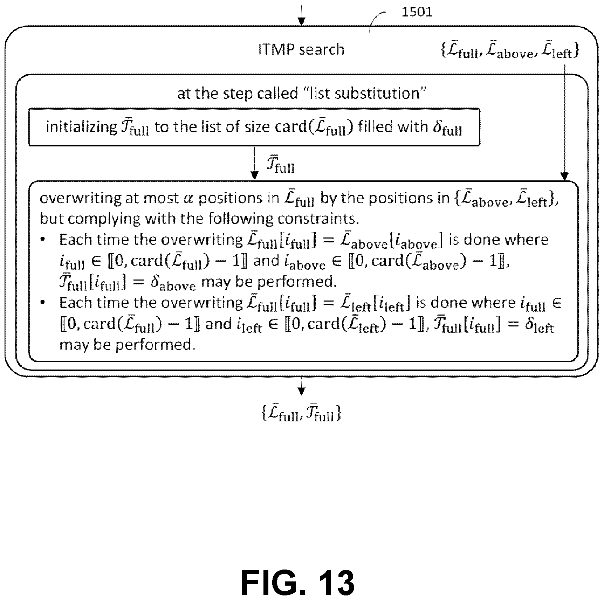

FIG. 13 shows an ITMP search during the decoding of a (e.g., the current) luma CB predicted by ITMP. Even though the combination of FIG. 11 and FIG. 12 may depict an implementation of the creation of the list of types of template matching through aligned substitutions for a luma CB predicted via ITMP, any equivalent implementation may apply. In examples, the combination FIG. 11 and FIG. 13 may show an implementation of the creation of the list of types of template matching through aligned substitutions for a luma CB predicted via ITMP.

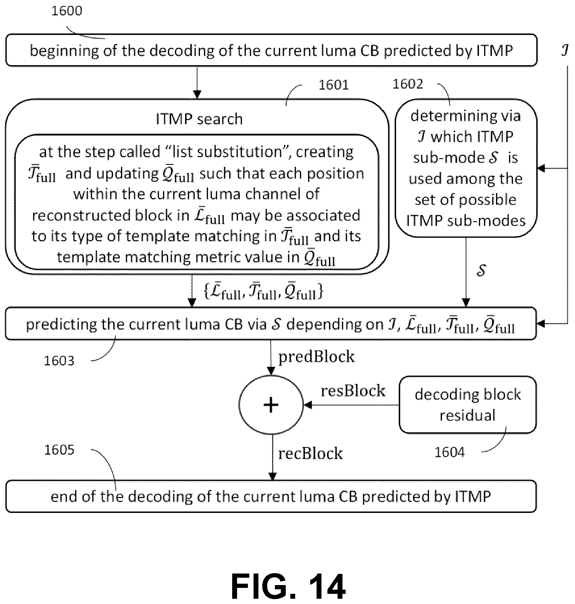

FIG. 14 shows decoding of a (e.g., the current) luma CB predicted by ITMP. Updating the list of template matching metric values may be provided. For a luma CB predicted via ITMP, some ITMP sub-modes may need the template matching metric values, during the step called "list substitution", a list 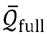 may be updated such that each position within the current luma channel of reconstructed block in 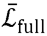 may be associated to its template matching metric value in 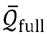 , c.f. FIG. 14 shows a fusion via blending sub-mode which may require the template matching metric values associated to some positions within the current luma channel of reconstructed blocks in 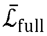 .

In FIG. 14, the descriptions of (1600), (1602), (1604), and (1605) may follow those of (1500), (1502), (1504), and (1505) respectively in FIG. 11.

At (1601), the ITMP search for the current luma CB may be run and, at the step called "list substitution", 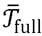 may be created and 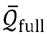 may be updated such that each position within the current luma channel of reconstructed block in 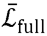 may be associated to its type of template matching in 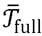 and its template matching metric value in 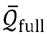 . In examples, card( 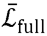 ) = card( 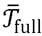 ) = card( 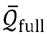 ) and, for $i ∈ \left〚0, card\left({\overline{L}}_{full}\right)-1\right〛$, 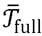 [*i*] and 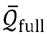 [*i*] may correspond respectively to the type of template matching and the template matching metric value of the reconstructed block with position 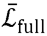 [*i*] within the current luma channel. In examples, card( 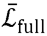 ) = 19. As another example, card( 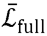 ) = 13.

At (1603), the current luma CB may be predicted via 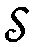 depending on 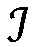 *,* 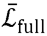 , 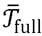 , and 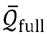 , yielding a prediction predBlock of the current luma CB.

Combination of the creation of the list of types of template matching through aligned substitutions and updating the list of template matching metric values.

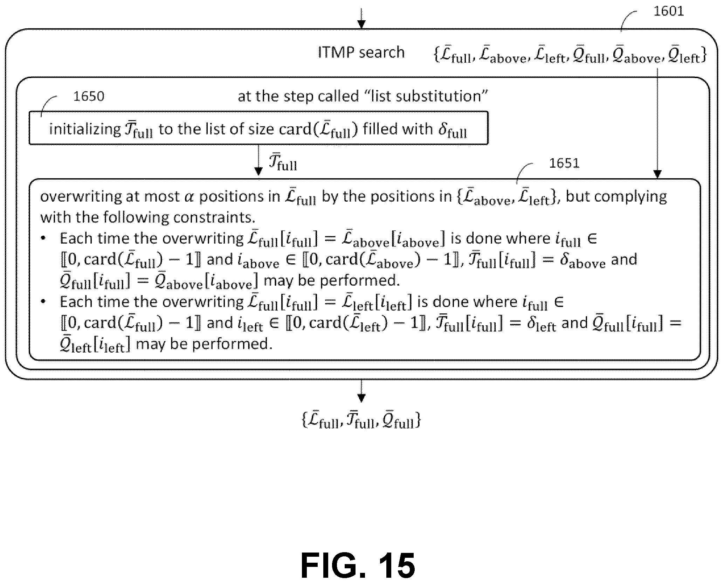

In examples, the creation of the list of types of template matching through aligned substitutions and updating the list of template matching metric values may be straightforwardly combined. For a luma CB predicted via ITMP, this combination may be illustrated by gathering FIG. 14 and FIG. 15.

FIG. 15 shows an ITMP search during the decoding of a (e.g., the current) luma CB predicted by ITMP. In FIG. 15, at the step called "list substitution", before running {(1650), (1651)}, 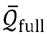 may be defined as, for $i ∈ \left〚0, card\left({\overline{L}}_{full}\right)-1\right〛$, 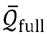 [*i*] may equal the 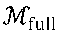 value associated to the position 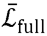 [*i*] within the current luma channel of reconstructed block. 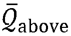 may be defined as, for i ∈ $\left〚0, card\left({\overline{L}}_{above}\right)-1\right〛$, 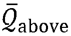 [*i*] may equal the 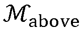 value associated to 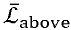 [*i*]. 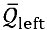 may be defined as, for $i ∈ \left〚0, card\left({\overline{L}}_{left}\right)-1\right〛$, 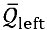 [*i*] may equal the 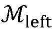 value associated to 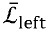 [*i*].

At (1650), 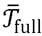 may be initialized to the list of size card( 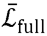 ) filled with *δ*_{full}. At (1651), at most α positions in 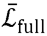 may be overwritten by the positions in { 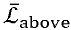 , 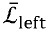 }, but under the following constraints. Each time the overwriting 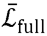 [*i*_{full}] = 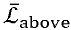 [*i*_{above}] is done where *i*_{full} ∈ $\left〚0, card\left({\overline{L}}_{full}\right)-1\right〛$ and ${i}_{above} ∈ \left〚0, card\left({\overline{L}}_{above}\right)-1\right〛$, 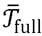 [*i*_{full}] = *δ*_{above} and 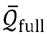 [*i*_{full}] = 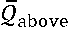 [*i*_{above}] may be performed. Each time the overwriting 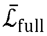 [*i*_{full}] = 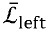 [*i*_{left}] is done where ${i}_{full} ∈ \left〚0, card\left({\overline{L}}_{full}\right)-1\right〛$ and ${i}_{left} ∈ \left〚0, card\left({\overline{L}}_{left}\right)-1\right〛$, 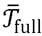 [*i*_{full}] = δ_{left} and 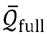 [*i*_{full}] = 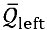 [*i*_{left}] may be performed.

ITMP sub-modes may be performed based on the types of template matching. In the hybrid block-based video codec of interest, for a block predicted via ITMP, the different ITMP sub-modes may be tailored to the types of template matching. In examples, any of the sub-modes may be inserted into (1303) in FIG. 9 or (1404) in FIG. 10 or (1503) in FIG. 11 or (1603) in FIG. 14.

LIC may be performed. For a luma CB predicted via ITMP, the LIC sub-mode may be adapted to the type of template matching (e.g., the template matching type associated with the determined position as indicated in the template matching type information, e.g., the template matching type used to perform template matching to identify the chosen position). In examples, during the learning of the LIC parameters (*α, β*)*,* the used templates for learning (*α, β*) may depend on the type of template matching of the single reconstructed block involved in the LIC sub-mode. In examples, the LIC sub-mode of ITMP may be selected to predict the current W × *H* luma CB.

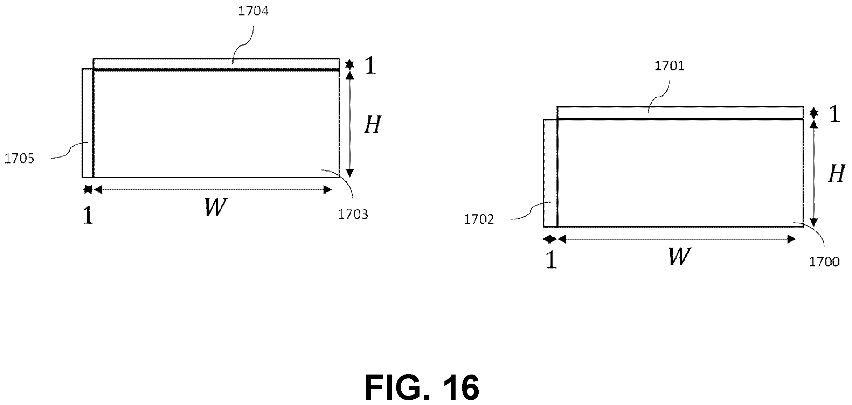

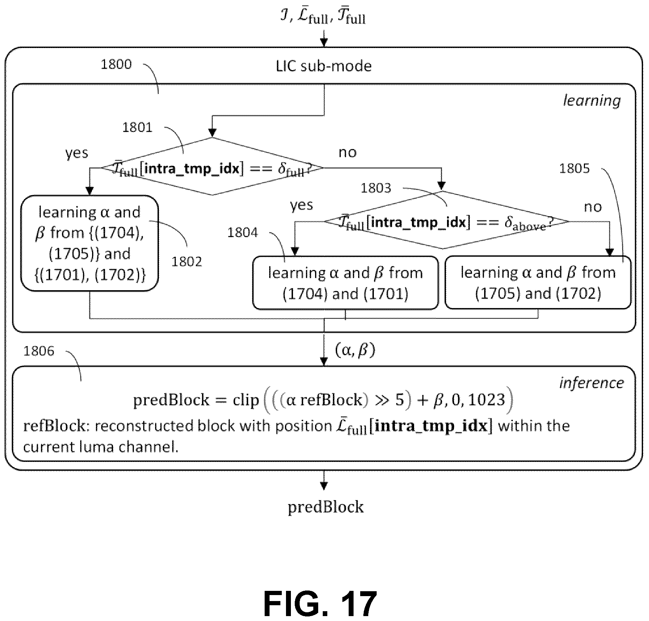

FIG. 17 shows LIC sub-mode during the decoding of a (e.g., the current) luma CB predicted by ITMP. (1800) may refer to the learning process of (*α, β*). At (1801), if 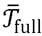 **[intra_tmp_idx]** is equal to *δ*_{full}, the process may move on to (1802). The process may (e.g., otherwise) advance to (1803). At (1802), (*α, β*) may be learned from the full template {(1704 of FIG. 16), (1705 of FIG. 16)} of *the W* × *H* reconstructed block (1703 of FIG. 16) with position 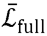 [intra_tmp_idx] within the current luma channel and/or the full template {(1701 of FIG. 16), (1702 of FIG. 16)} of the current W × *H* luma CB (1700 of FIG. 16). At (1803), if 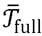 **[intra_tmp_idx]** is equal to δ_{above}, the process may switch to (1804). The process may (e.g., otherwise) go to (1805). At (1804), (*α, β*) may be learned from the portion (1704) of the template of (1703 of FIG. 16) and/or the portion (1701 of FIG. 16) of the template of (1700 of FIG. 16). At (1805), (α,*β*) may be learned from the portion (1705 of FIG. 16) of the template of (1703 of FIG. 16) and/or the portion (1702 of FIG. 16) of the template of (1700 of FIG. 16). Regardless of whether the process comes from (1802), (1804) or (1805), the process may get to (1806). At (1806), a prediction predBlock of the current luma CB may be produced using *the W* × *H* reconstructed block with position 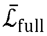 [intra_tmp_idx] within the current luma channel and (*α, β*)*.*

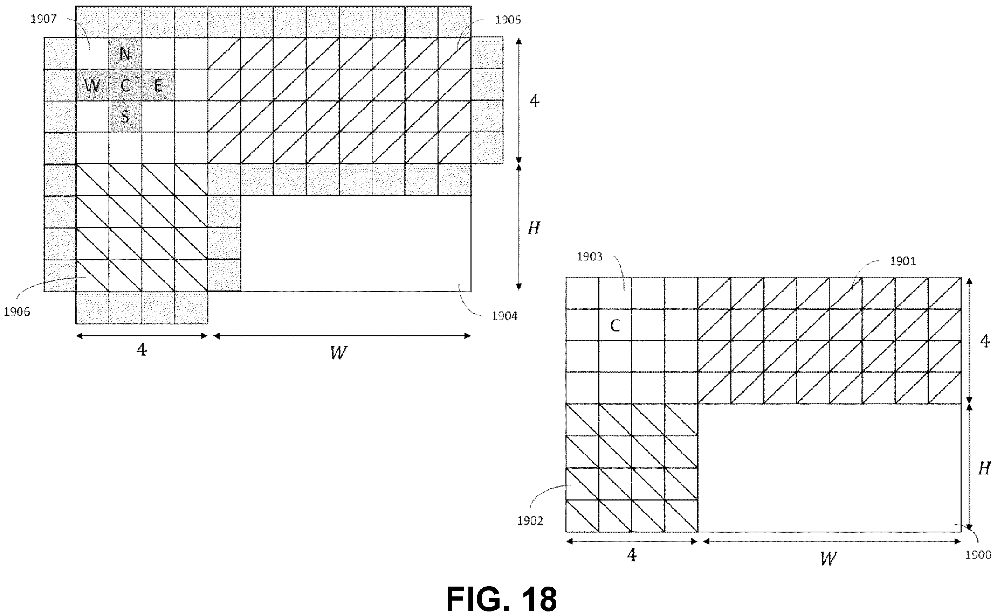

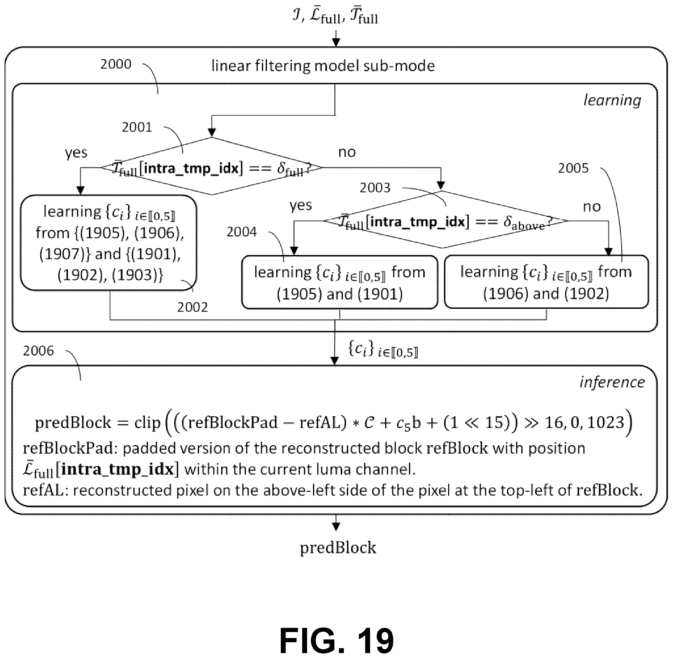

A linear filtering model may be derived based on the template match type associated with a position. FIG. 18 and FIG. 19 show the linear filtering model sub-mode of ITMP selected to predict the current W × *H* luma CB. For a luma CB predicted via ITMP, the linear filtering model sub-mode may be adapted to a type of template matching (e.g., the template matching type associated with the determined position as indicated in the template matching type information, e.g., the template matching type used to perform template matching to identify the chosen position). In examples, during the learning of the linear filtering model parameters ${\left\{{c}_{i}\right\}}_{i ∈ \left〚0, 5\right〛}$, the used templates for learning ${\left\{{c}_{i}\right\}}_{i ∈ \left〚0, 5\right〛}$ may depend on the type of template matching of the single reconstructed block involved in the linear filtering model sub-mode.

FIG. 19 shows a linear filtering model sub-mode during the decoding of the current luma CB predicted by ITMP. (2000) may refer to the learning process of ${\left\{{c}_{i}\right\}}_{i ∈ \left〚0, 5\right〛}$.

At (2001), if 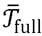 **[intra_tmp_idx]** is equal to *δ*_{full}, the process may get to (2002). The process may (e.g., otherwise) advance to (2003). At (2002), ${\left\{{c}_{i}\right\}}_{i ∈ \left〚0, 5\right〛}$ may be learned from the full template {(1905), (1906), (1907)} of *the W* × *H* reconstructed block (1904) with position 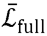 [intra_tmp_idx] within the current luma channel and the full template {(1901), (1902), (1903)} of the current W × *H* luma CB (1900). At (2003), if 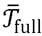 **[intra_tmp**_**idx]** is equal to *δ*_{above}, the process may move to (2004). The process may (e.g., otherwise) go to (2005). At (2004), ${\left\{{c}_{i}\right\}}_{i ∈ \left〚0, 5\right〛}$ may be learned from the portion (1905) of the template of (1904) and the portion (1901) of the template of (1900). (1905) and (1901) may be displayed with diagonal borders "bottom-left to top-right". At (2005), ${\left\{{c}_{i}\right\}}_{i ∈ \left〚0, 5\right〛}$ may be learned from the portion (1906) of the template of (1904) and the portion (1902) of the template of (1900). (1906) and (1902) are displayed with diagonal borders "top-left to bottom-right". Regardless of whether the process comes from (2002), (2004) or (2005), the process may go to (2006). At (2006), a prediction predBlock of the current luma CB may be generated using a padded version of *the W* × *H* reconstructed block with position 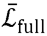 **[intra_tmp_idx]** within the current luma channel and ${\left\{{c}_{i}\right\}}_{i ∈ \left〚0, 5\right〛}$.

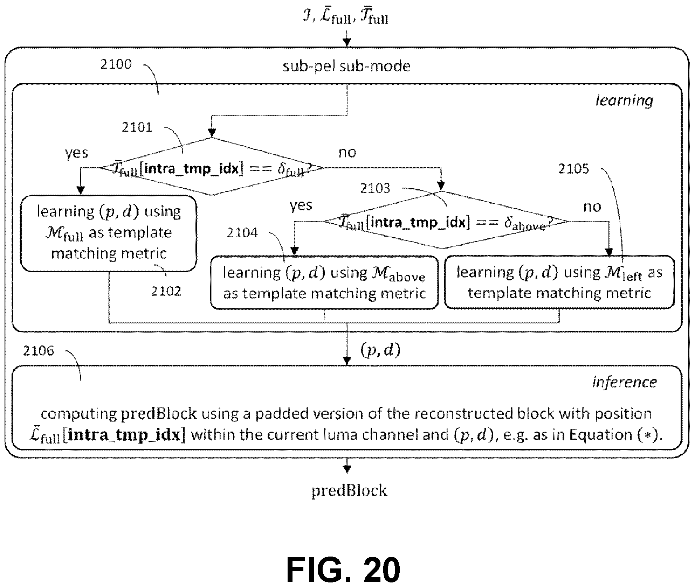

FIG. 20 shows the sub-pel sub-mode of ITMP selected to predict a (e.g., the current) luma CB. Sub-pel may be provided. For a luma CB predicted via ITMP, a sub-pel sub-mode may be adapted to the type of template matching (e.g., the template matching type associated with the determined position as indicated in the template matching type information, e.g., the template matching type used to perform template matching to identify the chosen position). Adaptation of the template matching metric inside the learning of sub-pel may be provided. In examples, during the learning of the pair (p, *d)* of sub-pel parameters, the used template matching metric may depend on the type of template matching of the single reconstructed block involved in the sub-pel sub-mode, see FIG. 20 for an exemplary diagram. (2100) may refer to the learning process of (p, *d).*

At (2101), if 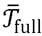 **[intra_tmp_idx]** is equal to *δ*_{full}, the process may move on to (2102). The process may switch to (2103). At (2102), *(p, d)* may be learned using 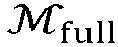 as template matching metric. In examples, Table 1 may apply unmodified. At (2103), if 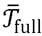 **[intra_tmp_idx]** is equal to *δ*_{above}, the process may move to (2104). The process may (e.g., otherwise) go to (2105). At (2104), (p, *d)* may be learned using 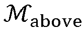 as template matching metric. In examples, Table 3 may apply (e.g., instead of Table). At (2105), (p, *d)* may be learned using 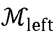 as template matching metric. In examples, Table 4 may apply (e.g., instead of Table 1. Regardless of whether the process comes from (2102), (2104) or (2105), the process may move on to (2106). At (2106), a prediction predBlock of the current luma CB may be generated using a padded version of the reconstructed block refBlock with position 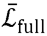 **[intra**_**tmp_idx]** within the current luma channel and (p, *d),* e.g. as in Equation (*).

| |
|---|
| 1. For each of a number of (e.g., the 16) possible filterings, the 4-tap version of this filtering may apply to a padded version of the template of refBlock, and/or the template matching metric 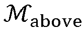 between the result of this filtering and the template of this luma CB may be computed. |
| 2. The pairs of parameters of the 16 possible filterings may be sorted in an order (e.g., an ascending order of 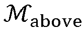 ). |
| 3. The sub-list 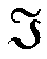 may gather the first two pairs of parameters from the previously sorted list. |
| 4. The pair (p, d) = 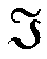 **[intra_tmp_frac_idx]** may be chosen to predict this luma CB, **intra_tmp_frac_idx** ∈ {0, 1}. |

Table 3: learning of the pair ***(p, d)*** of parameters for a luma CB selecting the sub-pel sub-mode for prediction, knowing that 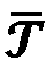 _{full}[intra_tmp_idx] = ***δ*_{above}.**

| |
|---|
| 1. For each of a number of (e.g., the 16) possible filterings, the 4-tap version of this filtering may apply to a padded version of the template of refBlock, and/or the template matching metric 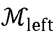 between the result of this filtering and the template of this luma CB may computed. |
| 2. The pairs of parameters of the 16 possible filterings may be sorted in an order (e.g., an ascending order of 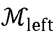 ). |
| 3. The sub-list 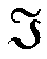 may gather a number of (e.g., the first two) pairs of parameters from the previously sorted list. |
| 4. The pair (p, d) = 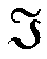 **[intra_tmp_frac_idx]** may be chosen to predict this luma CB, **intra_tmp_frac_idx** ∈ {0, 1}. |

Table 4: learning of the pair ***(p, d)*** of parameters for a luma CB selecting the sub-pel sub-mode for prediction, knowing that 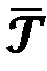 _{full}[intra_tmp_idx] = *δ*_{left}.

LIC may be incorporated into the learning of sub-pel. For a luma CB predicted via ITMP, if LIC and sub-pel are selected to predict this luma CB, LIC may be incorporated into the learning of the pair (p, *d)* of sub-pel parameters. The application of LIC may depend on the type of template matching of the single reconstructed block involved in the sub-pel mode.

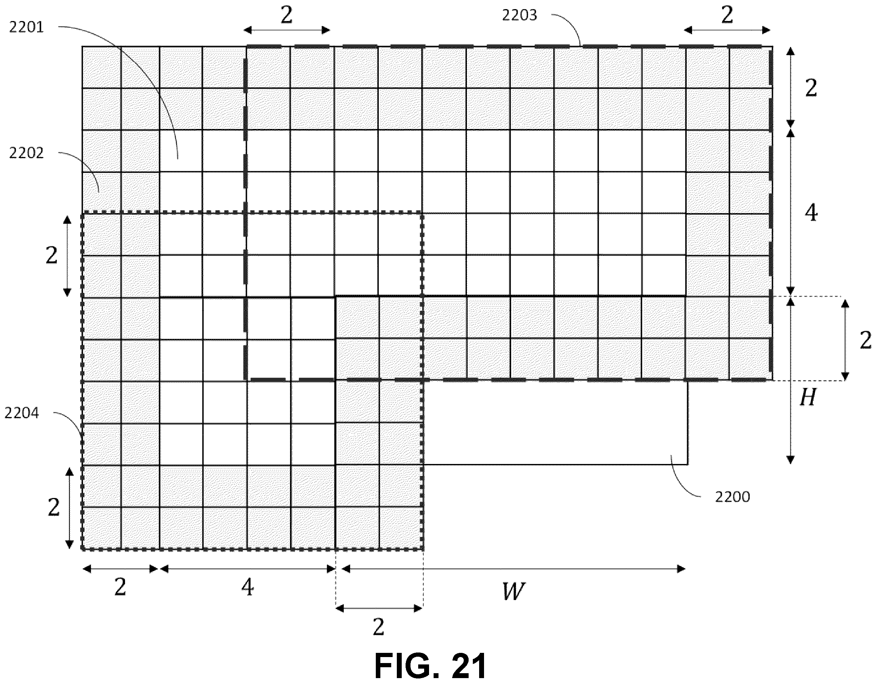

LIC may be applied before the different fractional interpolations. During the learning of (p, *d),* LIC may apply to a padded version of the template of the reconstructed block with position 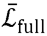 [**intra_tmp_idx**] within the current luma channel before applying the different fractional interpolations. In examples, the combination of the LIC being applied before the different fractional interpolations and the used template matching metric depending on the type of template matching of the single reconstructed block involved in the sub-pel mode, may be shown in FIG. 21.

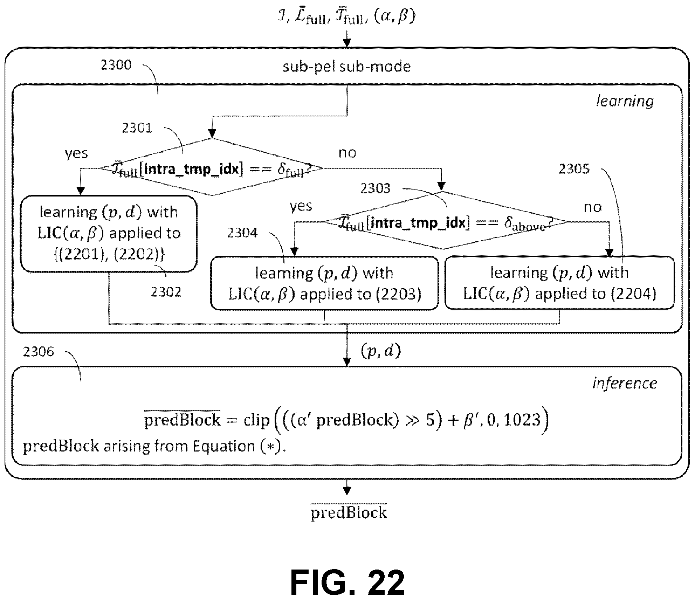

FIG. 22 shows a sub-pel sub-mode during the decoding of a (e.g., the current) luma CB predicted by ITMP. (2300) may refer to the learning process of (p, *d).* At (2301), if 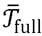 **[intra_tmp_idx]** is equal to *δ*_{full}, the process may move on to (2302). The process may (e.g., otherwise) go to (2303). At (2302), *(p, d)* may be learned, applying LIC of parameters (*α, β*) to the padded version {(2201), (2202)} of the full template of the reconstructed block (2200) with position 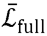 **[intra**_**tmp**_**idx]** within the current luma channel, and using SAD_{full} as template matching metric. (*α, β*) may come from the learning of LIC for the current luma CB. In examples, Table 5 may apply instead of Table1. In examples, in FIG. 21, the size of {(2201), (2202)} may be 8(W + 8) + 8H. At (2303), if 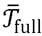 **[intra_tmp_idx]** is equal to *δ*_{above}, the process may move to (2304). The process may go to (2305). At (2304), (p, *d)* may be learned, applying LIC of parameters (*α, β*) to the padded version (2203) of the "above" portion of the template of the reconstructed block (2200) with position 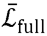 **[intra_tmp**_**idx]** within the current luma channel and using SAD_{above} as template matching metric. In examples, Table 6 may apply (e.g., instead of Table 1). In FIG. 21, (2203) may be framed with bold dashes. In examples, in FIG, 21 the size of (2203) may be 8(W + 4).

At (2305), *(p, d)* may be learned, applying LIC of parameters (*α, β*) to the padded version (2204) of the "left" portion of the template of the reconstructed block (2200) with position 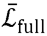 **[intra**_**tmp_idx]** within the current luma channel and using SAD_{left} as template matching metric. In examples, Table 7 may apply (e.g., instead of Table 1). As shown, (2204) may be framed with dots. For instance, in FIG. 21, the size of (2204) may be 8(H + 4). Regardless of whether the process comes from (2302), (2304) or (2305), the process may move on to (2306).

At (2306), a prediction predBlock of the current luma CB may be generated using a padded version of the reconstructed block with position 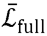 **[intra**_**tmp_idx]** within the current luma channel and *(p, d).* At (2306), the use of the LIC parameters (α', *β*') may indicate that, after (2300), the learning of the LIC parameters may be re-run as the reconstructed block with position 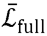 [intra_tmp_idx] within the current luma channel may be viewed as shifted by fractional pel.

| |
|---|
| 1. LIC of parameters (*α, β*) may apply to {(2201), (2202)}, yielding the LIC transformed padded version of the full template of (2200). |
| 2. For each of a number of (e.g., the 16) possible filterings, the 4-tap version of this filtering may apply to the LIC transformed padded version of the full template of (2200), and/or the template matching metric SAD_{full} between the result of this filtering and the template of this luma CB may be computed. |
| 3. The pairs of parameters of the 16 possible filterings may be sorted in an order (e.g., an ascending order of SAD_{full}). |
| 4. The sub-list 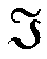 may gather a number of (e.g., the first two) pairs of parameters from the previously sorted list. |
| 5. The pair (p, d) = 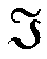 **[intra_tmp_frac_idx]** may be chosen to predict this luma CB, **intra_tmp_frac_idx** ∈ {0, 1}. |

Table 5: learning of the pair ***(p, d)*** of parameters for a luma CB selecting LIC and the sub-pel for prediction, knowing that 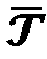 _{full} [intra_tmp_idx] = ***δ*_{full}.**

| |
|---|
| 1. LIC of parameters (*α, β*) may apply to (2203), yielding the LIC transformed padded version of the "above" portion of the template of (2200). |
| 2. For each of a number of (e.g., the 16) possible filterings, the 4-tap version of this filtering may apply to the LIC transformed padded version of the "above" portion of the template of (2200), and/or the template matching metric SAD_{above} between the result of this filtering and the template of this luma CB may be computed. |
| 3. The pairs of parameters of the 16 possible filterings may be sorted in an order (e.g., an ascending order of SAD_{above}). |
| 4. The sub-list 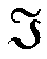 may gather a number of (e.g., the first two) pairs of parameters from the previously sorted list. |
| 5. The pair (p, *d)* = 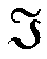 **[intra_tmp_frac_idx]** may be chosen to predict this luma CB, **intra_tmp_frac_idx** ∈ {0, 1}. |

Table 6: learning of the pair (*p, d*) of parameters for a luma CB selecting LIC and the sub-pel for prediction, knowing that 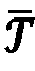 _{full} [intra_tmp_idx] = ***δ*_{above}.**

| |
|---|
| 1. LIC of parameters (*α, β*) may apply to (2204), yielding the LIC transformed padded version of the "left" portion of the template of (2200). |
| 2. For each of a number of (e.g., the 16) possible filterings, the 4-tap version of this filtering may apply to the LIC transformed padded version of the "left" portion of the template of (2200), and/or the template matching metric SAD_{left} between the result of this filtering and the template of this luma CB may be computed. |
| 3. The pairs of parameters of the 16 possible filterings may be sorted in an order (e.g., an ascending order of SAD_{left}). |
| 4. The sub-list 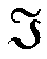 may gather a number of (e.g., the first two) pairs of parameters from the previously sorted list. |
| 5. The pair (p, *d)* = 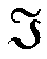 **[intra_tmp_frac_idx]** may be chosen to predict this luma CB, **intra_tmp_frac_idx** ∈ {0, 1}. |

Table 7: learning of the pair *(p, d)* of parameters for a luma CB selecting LIC and the sub-pel for prediction, knowing that 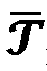 _{full} [intra_tmp_idx] = *δ*_{left}.

LIC may be applied after a fractional interpolation. During the learning of (p, *d),* LIC may apply to the result of the filtering via a 4-tap fractional interpolation filter of the template of refBlock, and/or a template matching metric may be calculated between the result of the LIC application and the template of the current luma CB. refBlock may refer to the reconstructed block with position 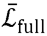 **[intra_tmp_idx]** within the current luma channel. Advantageously, in the combination of applying LIC after a fractional interpolation and the used template matching metric depending on the type of template matching of the single reconstructed block involved in the sub-pel mode, during the learning of *(p, d),* 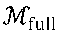 = SAD_{full}, 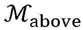 = SAD_{above}, and 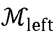 = SAD_{left}.

Fusion may be performed. For a luma CB predicted via ITMP, the fusion sub-mode may be adapted to the type of template matching (e.g., the template matching type associated with the determined position as indicated in the template matching type information, e.g., the template matching type used to perform template matching to identify the chosen position). For a luma CB predicted via ITMP, the fusion via filtering sub-mode may be adapted to the type of template matching. In examples, during the learning of the fusion via filtering parameters ${\left\{{w}_{i}\right\}}_{i ∈ \left〚0, m\right〛}$, the used templates for learning ${\left\{{w}_{i}\right\}}_{i ∈ \left〚0, m\right〛}$ may depend on the types of template matching of the different reconstructed blocks involved in the fusion via filtering sub-mode.

For a luma CB predicted via ITMP, the fusion via blending sub-mode may be adapted to the type of template matching (e.g., the template matching type associated with the determined position as indicated in the template matching type information, e.g., the template matching type used to perform template matching to identify the chosen position). In examples, during the prediction of the current luma CB via the fusion via blending sub-mode, the blending process may depend on the types of template matching of the different reconstructed blocks involved in the fusion via blending sub-mode.

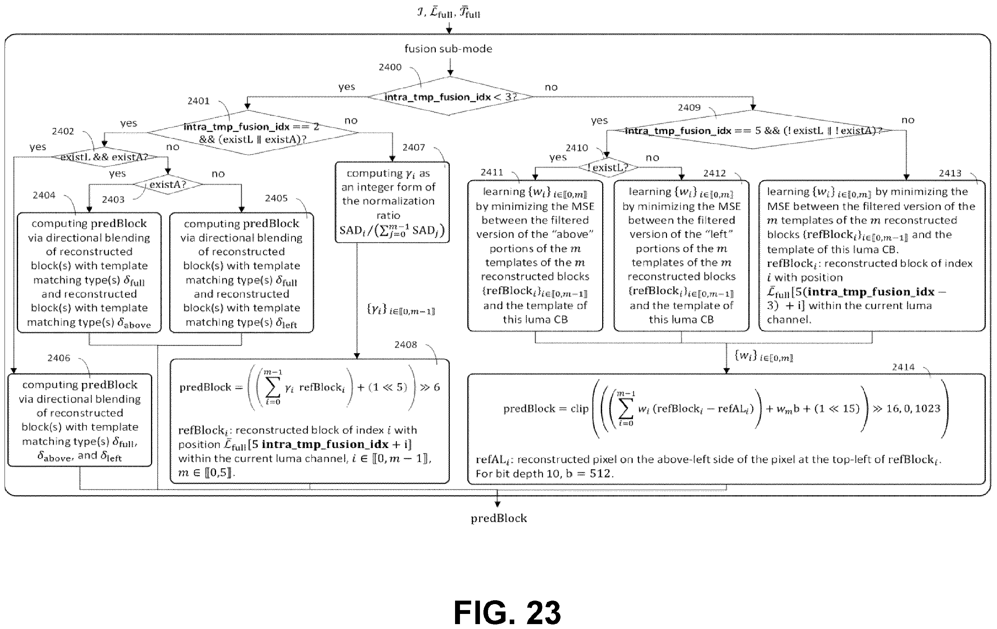

FIG. 23 shows fusion sub-mode during the decoding of a (e.g., the current) W × *H* luma CB predicted by ITMP.

At (2400), if **intra_tmp_fusion_idx** is smaller than 3, the process may move to (2401). The process may (e.g., otherwise) move to (2409).

At (2401), if intra_tmp_fusion_idx is equal to 2 and existL is true or existA is true, the process may move to (2402). The process may (e.g. otherwise) move to (2407). In examples, card( 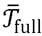 ) = 19 and existL may mean that there exists $i ∈ \left〚10, 18\right〛$ such that 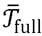 [*i*] = *δ*_{left}. In examples, card( 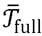 ) = 19 and existA may mean that there exists $i ∈ \left〚10, 18\right〛$ such that 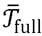 [i] = *δ*_{above}.

At (2402), if existL is true and existA is true, the process may move to (2406). The process may (e.g. otherwise) move to (2403).

At (2403), if existA is true, the process may move to (2404). The process may (e.g. otherwise) move to (2405).

At (2404), a prediction predBlock of a (e.g. the current) W × *H* luma CB may be computed via directional blending of reconstructed block(s) with template matching type(s) δ_{full} and reconstructed block(s) with template matching type(s) *δ*_{above}. In examples, predBlock may be computed via directional blending of *the W* × *H* reconstructed block refBlock₀ with position 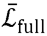 [10] within a (e.g., the current) luma channel, *the W* × *H* reconstructed block refBlock₁ with position 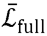 [11] within a (e.g., the current) luma channel, *the W* × *H* reconstructed block refBlock₂ with position 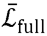 [12] within a (e.g., the current) luma channel, and *the W* × *H* reconstructed block refBlock*_{A}* with position 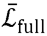 [idxA] within a (e.g., the current) luma channel. In examples, $idxA = {min}_{i ∈ \left〚10, 18\right〛} \left(i\right)$ such that 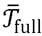 [i] = *δ*_{above}. In examples, predBlock = (refBlockNonLoc * wNonLoc + refBlock*_{A}* * wVer + 32) » 6. * may mean the element-wise multiplication between a number of (e.g., two) matrices of (e.g., same) dimensions. In examples, refBlockNonLoc = (22 refBlock₀ + 21 refBlock₁ + 21 refBlock₂ + (1 « 5)) » 6. In examples, wVer may denote *the W* × *H* matrix such that, for $x ∈ \left〚0,W-1\right〛$ and $y ∈ \left〚0,H-1\right〛$, wVer(x, y) = ((r + wBase)(H - 1) - ((*r y) « 1))* /(*H -* 1). In examples, wNonLoc = 64 - wVer. In examples, r = 10. In examples, r = 12. In examples, r = 8. In examples, wBase = 12. In examples, wBase = 16. In examples, wBase = 24. In examples, predBlock may be computed via directional blending of refBlock₀, refBlock₁, refBlock₂, *the W* × *H* reconstructed block refBlock₃ with position 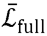 [18] within the current luma channel, and refBlock*_{A}*. In examples, $idxA = {min}_{i ∈ \left〚10, 17\right〛} \left(i\right)$ such that 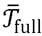 [*i*] = *δ*_{above}. In examples, predBlock = (refBlockNonLoc * wNonLoc + refBlock*_{A}* * wVer + 32) » 6. In examples, refBlockNonLoc = (16 refBlock, + 16 refBlock₁ + 16 refBlock₂ + 16 refBlock₃ + (1 « 5)) » 6.

At (2405), a prediction predBlock of a (e.g. the current) W × *H* luma CB may be computed via directional blending of reconstructed block(s) with template matching type(s) *δ*_{full} and reconstructed block(s) with template matching type(s) *δ*_{left}. In examples, predBlock may be computed via directional blending of the *W* × *H* reconstructed block refBlock, with position 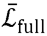 [10] within the current luma channel, the *W* × *H* reconstructed block refBlock₁ with position 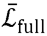 [11] within the current luma channel, the *W* × *H* reconstructed block refBlock₂ with position 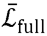 [12] within the current luma channel, and the *W* × *H* reconstructed block refBlock*_{L}* with position 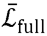 [idxL] within the current luma channel. In examples, $idxL = {min}_{i ∈ \left〚10, 18\right〛} \left(i\right)$ such that 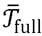 [*i*] = *δ*_{left}. In examples, predBlock = (refBlockNonLoc * wNonLoc + refBlock*_{L}* * wHor + 32) » 6. * may mean the element-wise multiplication between a number of (e.g., two) matrices of (e.g., same) dimensions. In examples, refBlockNonLoc = (22 refBlock₀ + 21 refBlock₁ + 21 refBlock₂ + (1 « 5)) » 6. In examples, wHor may denote the *W* × *H* matrix such that, for $x ∈ \left〚0,W-1\right〛$ and $y ∈ \left〚0,H-1\right〛$. whor(x, y) = ((r + *wBase)(W* - 1) - ((*r x)* « 1)) /(*W* - 1). In examples, wNonLoc = 64 - wHor. In examples, r = 9. In examples, r = 13. In examples, r = 10. In examples, wBase = 14. In examples, wBase = 18. In examples, wBase = 26. In examples, predBlock may be computed via directional blending of refBlock₀, refBlock₁, refBlock₂, the *W* × *H* reconstructed block refBlock₃ with position 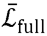 [18] within the current luma channel, and refBlock*_{L}*. In examples, idxL = ${min}_{i ∈ \left〚10, 17\right〛} \left(i\right)$ such that 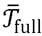 [*i*] = *δ*_{left}. In examples, predBlock = (refBlockNonLoc * wNonLoc + refBlock*_{L}* * wHor + 32) » 6. In examples, refBlockNonLoc = (16 refBlock, + 16 refBlock₁ + 16 refBlock₂ + 16 refBlock₃ + (1 « 5)) » 6.

At (2406), a prediction predBlock of a (e.g. the current) W × *H* luma CB may be computed via directional blending of reconstructed block(s) with template matching type(s) δ_{full}, *δ*_{above}, and δ_{left}. In examples, predBlock may be computed via directional blending of the *W* × *H* reconstructed block refBlock, with position 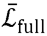 [10] within the current luma channel, the *W* × *H* reconstructed block refBlock₁ with position 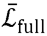 [11] within the current luma channel, the *W* × *H* reconstructed block refBlock₂ with position 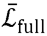 [12] within the current luma channel, the *W* × *H* reconstructed block refBlock*_{A}* with position 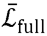 [idxA] within the current luma channel, and the *W* × *H* reconstructed block refBlock*_{L}* with position 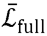 [idxL] within the current luma channel. In examples, idxA = ${min}_{i ∈ \left〚10, 18\right〛} \left(i\right)$ such that 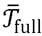 [i] = *δ*_{above}. In examples, $idxL = {min}_{i ∈ \left〚10, 18\right〛} \left(i\right)$ such that 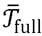 [*i*] = *δ*_{left}. In examples, predBlock = (refBlockNonLoc * wNonLoc + refBlock*_{A}* * wVer + refBlock*_{L}* * wHor + 32) » 6. * may mean the element-wise multiplication between a number of (e.g., two) matrices of (e.g., same) dimensions. In examples, refBlockNonLoc = (22 refBlock₀ + 21 refBlock₁ + 21 refBlock₂ + (1 « 5)) » 6. For instance, wVer may denote the *W* × *H* matrix such that, for $x ∈ \left〚0, W-1\right〛$ and $y ∈ \left〚0, H-1\right〛$, wVere(*x*,*y*) = ((r + wBaseA)(H - 1) - ((*r y*) « 1)) /(*H* - 1). In examples, wHor may denote *the W* × *H* matrix such that, for *x* ∈ $\left〚0, W-1\right〛$ and $y ∈ \left〚0, H-1\right〛$, wHor(x, y) = ((r + wBaseL)(W - 1) - ((r *x)* « 1)) /(*W -* 1). In examples, wNonLoc = 64 - wVer - wHor. In examples, r = 10. In examples, r = 12. In examples, r = 7. In examples, wBaseA = 14. In examples, wBaseA = 8. In examples, wBaseA = 7. In examples, wBaseL = 10. In examples, wBaseL = 11. In examples, predBlock may be computed via directional blending of refBlock₀, refBlock₁, refBlock₂, *the W* × *H* reconstructed block refBlock₃ with position 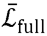 [18] within the current luma channel, refBlock*_{A}*, refBlock*_{L}*. In examples, idxA = ${min}_{i ∈ \left〚10, 17\right〛} \left(i\right)$ such that 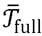 [*i*] = δ_{above}. For instance, $idxL = {min}_{i ∈ \left〚10, 17\right〛} \left(i\right)$ such that 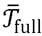 [*i*] = *δ*_{left}. For instance, predBlock = (refBlockNonLoc * wNonLoc + refBlock*_{A}* * wVer + refBlock*_{L}* * wHor + 32) » 6. In examples, refBlockNonLoc = (16 refBlock₀ + 16 refBlock₁ + 16 refBlock₂ + 16 refBlock₃ + (1 « 5)) » 6.

At (2407), the blending coefficients ${\left\{{γ}_{i}\right\}}_{i ∈ \left〚0,m-1\right〛}$ may be computed as an integer form of the normalization ratio ${SAD}_{i} / \left({\sum }_{j = 0}^{m - 1} {SAD}_{j}\right)$. In examples, SAD*ᵢ* may be the template matching metric value associated to the reconstructed block with position 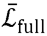 [5 **intra_tmp_fusion_idx** + i] within the current luma channel.

At (2408), a prediction predBlock of a (e.g. the current) W × *H* luma CB may be computed from the blending coefficients ${\left\{{γ}_{i}\right\}}_{i ∈ \left〚0,m-1\right〛}$ and refBlock*ᵢ*, $i ∈ \left〚0, m-1\right〛$, where refBlock*ᵢ* may denote the reconstructed block of index i with position 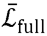 [5 **intra_tmp_fusion_idx** + i] within the current luma channel.

At (2409), if intra_tmp_fusion_idx is equal to 5 and existL is false or existA is false, the process may move to (2410). The process may (e.g. otherwise) move to (2413).

At (2410), if existL is false, the process may move (e.g., switch) to (2411). The process may (e.g. otherwise) move to (2412).

At (2411), the coefficients ${\left\{{w}_{i}\right\}}_{i ∈ \left〚0, m\right〛}$ may be learned by minimizing the MSE between the filtered version of the "above" portions of the m templates of the m reconstructed blocks ${\left\{{refBlock}_{i}\right\}}_{\left〚0,m-1\right〛}$ and the template of this luma CB. refBlock*ᵢ* may denote the reconstructed block of index i with position 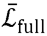 [5 **(intra_tmp_fusion_idx** - 3) + i] within the current luma channel. In examples, the "above" portion of the template of a reconstructed block and the "above" portion of the template of the current luma CB may be defined as in FIG. 4.

At (2412), the coefficients ${\left\{{w}_{i}\right\}}_{i ∈ \left〚0, m\right〛}$ may be learned by lowering (e.g., minimizing) the MSE between the filtered version of the "left" portions of the m templates of the m reconstructed blocks ${\left\{{refBlock}_{i}\right\}}_{\left〚0,m-1\right〛}$ and the template of this luma CB. In examples, the "left" portion of the template of a reconstructed block and the "left" portion of the template of the current luma CB may be defined as in FIG. 4.

At (2413), the coefficients ${\left\{{w}_{i}\right\}}_{i ∈ \left〚0, m\right〛}$ may be learned by lowering (e.g., minimizing) the MSE between the filtered version of the m templates of the m reconstructed blocks ${\left\{{refBlock}_{i}\right\}}_{\left〚0,m-1\right〛}$ and the template of this luma CB. refBlock*ᵢ* may denote the reconstructed block of index i with position 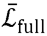 [5 **(intra_tmp_fusion_idx** - 3) + i] within the current luma channel.

At (2414), a prediction predBlock of a (e.g. the current) W × *H* luma CB may be computed from the coefficients ${\left\{{w}_{i}\right\}}_{i ∈ \left〚0, m\right〛}$, refBlockᵢ, and refALᵢ, $i ∈ \left〚0, m-1\right〛$. refBlock*ᵢ* may denote the reconstructed block of index i with position 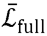 [5 **(intra_tmp_fusion_idx** - 3) + i] within the current luma channel. refAL*ᵢ* may refer to the reconstructed pixel on the above-left side of the pixel at the top-left of refBlock*ᵢ*.

For a luma CB predicted via ITMP, the combination of the fusion via filtering sub-mode and the LIC sub-mode may be adapted to the type of template matching. In examples, during the learning of the fusion via filtering parameters ${\left\{{w}_{i}\right\}}_{i ∈ \left〚0, m\right〛}$, the used templates for learning ${\left\{{w}_{i}\right\}}_{i ∈ \left〚0, m\right〛}$ may depend on the types of template matching of the different reconstructed blocks involved in the fusion via filtering sub-mode.

For a luma CB predicted via ITMP, the combination of the fusion via blending sub-mode and the LIC sub-mode may be adapted to the type of template matching. In examples, during the prediction of the current luma CB via the combination of the fusion via blending sub-mode and the LIC sub-mode, the blending process may depend on the types of template matching of the different reconstructed blocks involved in the fusion via blending sub-mode.

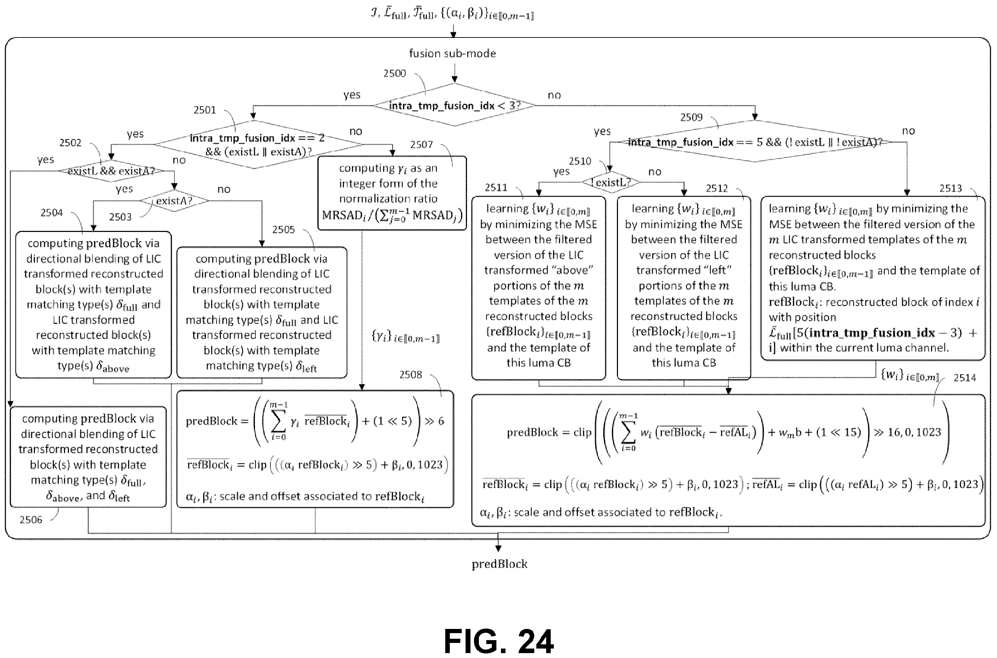

FIG. 24 shows fusion sub-mode in combination with LIC during the decoding of a (e.g., the current) *W* × *H* luma CB predicted by ITMP. In FIG. 24, if **intra_tmp_fusion_idx** < 3, (αᵢ, β*ᵢ*) denotes (e.g., respectively) the scale and the offset learned from the template of the reconstructed block with position 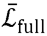 [5 **intra_tmp_fusion_idx** + i] within the current luma channel and the template of a (e.g., the current) luma CB. If **intra_tmp_fusion_idx** ≥ 3, (α*ᵢ*, β*ᵢ*) may denote respectively the scale and the offset learned from the template of the reconstructed block with position 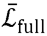 [5 **(intra_tmp_fusion_idx** - 3) + i] within the current luma channel and the template of a (e.g., the current) luma CB.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video decoding, comprising:
a processor configured to:
obtain template matching type information associated with a plurality of positions in a reconstructed area of a picture;
predict a current block based on the template matching type information; and
decode the current block based on the prediction of the current block.

2. A device for video encoding, comprising:
a processor configured to:
obtain template matching type information associated with a plurality of positions in a reconstructed area of a picture;
predict a current block based on the template matching type information; and
encode the current block based on the prediction of the current block.

3. The device of claim 1 or claim 2, wherein the processor is further configured to:
perform a first intra template matching prediction (ITMP) based on a first template matching type to identify a first position;
associate the first position with the first template matching type;
perform a second ITMP based on a second template matching type to identify a second position; and
associate the second position with the second template matching type, wherein the template matching type information is configured to indicate that the first position is associated with the first template matching type, and that the second position is associated with and the second template matching type.

4. The device of any of claims 1-3, wherein the processor is further configured to:
determine, from the plurality of positions, a position based on an intra template matching prediction (ITMP) index;
obtain a reference block based on the determined position;
obtain a template matching type associated with the position based on the template matching type information;
derive a local-Illumination compensation (LIC) parameter based on the template matching type associated with the position; and
refine the reference block based on the derived LIC parameter, wherein the current block is predicted using the refined reference block.

5. The device of any of claims 1-3, wherein the processor is further configured to:
determine, from the plurality of positions, a position based on an intra template matching prediction (ITMP) index;
obtain a template based on a template matching type associated with the position, wherein the template matching type information indicates the template matching type associated with the position;
derive a linear filtering parameter using the obtained template; and
filter a reference sample of the current block based on the derived linear filtering parameter, wherein the current block is predicted using the filtered reference sample.

6. The device of claim 1 or claim 2, wherein the processor is further configured to:
perform a first intra template matching prediction (ITMP) search based on a first template matching (TM) type, wherein the first ITMP identifies a first position of the plurality of positions;
store the first TM type associated with the first position in a template matching type list;
perform a second ITMP search based on a second TM type, wherein the second ITMP search identifies a second position of the plurality of positions; and
store the second TM type associated with the second position in the template matching type list, wherein the template matching type information is stored in the template matching type list and is configured to indicate that the first TM type is associated with the first position and the second TM type is associated with the second position.

7. The device of any one of claims 1 and 3-6, wherein the reconstructed area is an ITMP search area, and the processor is further configured to:
determine that intra template matching prediction (ITMP) is enabled for the current block;
generate a position list associated with the ITMP for the current block, wherein the position list comprises the plurality of positions;
determine a position associated with a reference block based on an intra template matching prediction (ITMP) index and the position list;
determine a prediction mode associated with the ITMP;
determine a template matching type associated with the position based on the template matching type information;
identify a template associated with the position based on the template matching type associated with the position; and
determine a prediction mode parameter associated with the prediction mode based on the identified template associated with the position, wherein the current block is predicted further based on the prediction mode parameter.

8. The device of claim 7, wherein the prediction mode is at least one of a local-Illumination compensation (LIC) ITMP sub-mode, a fusion ITMP sub-mode, a sub-pel ITMP sub-mode, or a linear filtering model ITMP sub-mode.

9. The device of any one of claims 2, 3 and 6-8, wherein the processor is further configured to:
determine that intra template matching prediction (ITMP) is enabled for the current block;
generate a position list associated with the ITMP for the current block, wherein the position list comprises the plurality of positions;
determine a position associated with a reference block and a prediction mode associated with the ITMP for the current block based on the position list, the template matching type information, and a plurality of prediction modes; and
include, in video data, a position indicator associated with the position and an indicator for the prediction mode.

10. The device of any one of claims 1-9, wherein the processor is further configured to:
obtain template matching metric information associated with the plurality of positions, wherein the current block is predicted further based on the template matching metric information, and wherein the template matching metric information indicates a difference between a prediction signal generated using a template associated with a block at a position of the plurality of positions and a prediction signal generated using a template of the current block.

11. The device of any one of claims 1-10, wherein the template matching type information indicates whether an above template matching (TM), a left TM, or a full TM is used in association with a respective position of the plurality of positions.

12. A method for video decoding, comprising:
obtaining template matching type information associated with a plurality of positions in a reconstructed area of a picture;
predicting a current block based on the template matching type information; and
decoding the current block based on the prediction of the current block.

13. A method for video encoding, comprising:
obtaining template matching type information associated with a plurality of positions in a reconstructed area of a picture;
predicting a current block based on the template matching type information; and
encoding the current block based on the prediction of the current block.

14. The method of claim 12 or claim 13, further comprising:
performing a first intra template matching prediction (ITMP) based on a first template matching type to identify a first position;
associating the first position with the first template matching type;
performing a second ITMP based on a second template matching type to identify a second position; and
associating the second position with the second template matching type, wherein the template matching type information is configured to indicate that the first position is associated with the first template matching type, and that the second position is associated with and the second template matching type.

15. The method of any of claims 12-14, further comprising:
determining, from the plurality of positions, a position based on an intra template matching prediction (ITMP) index;
obtaining a reference block based on the determined position;
obtaining a template matching type associated with the position based on the template matching type information;
deriving a local-Illumination compensation (LIC) parameter based on the template matching type associated with the position; and
refining the reference block based on the derived LIC parameter, wherein the current block is predicted using the refined reference block.
